# EUROPÄISCHE PATENTSCHRIFT

(11) **EP 3 880 401 B1**
(45) Veröffentlichungstag und Bekanntmachung des Hinweises auf die Patenterteilung: **16.11.2022**
(21) Anmeldenummer: 20751502.4
(22) Anmeldetag: 30.07.2020
(51) Int. Cl.: B24B 7/18, B25F 5/02

(54) **VERBINDUNGSANORDNUNG FÜR EINE HANDGEFÜHRTE WERKZEUGMASCHINE UND HANDGEFÜHRTE WERKZEUGMASCHINE**
CONNECTION ARRANGEMENT FOR A HAND-GUIDED MACHINE TOOL AND HAND-GUIDED MACHINE TOOL
AGENCEMENT DE RACCORDEMENT POUR MACHINE-OUTIL GUIDÉE À LA MAIN, ET MACHINE-OUTIL GUIDÉE À LA MAIN

(30) Priorität: 05.11.2019 DE 102019129823
(43) Veröffentlichungstag der Anmeldung: 22.09.2021
(73) Patentinhaber: Festool GmbH, 73240 Wendlingen am Neckar (DE)
(72) Erfinder: TULODZIECKI, Stefan, 73765 Neuhausen a.d.F. (DE); ALBRECHT, Hans-Peter, 73240 Wendlingen (DE)
(74) Vertreter: DREISS Patentanwälte PartG mbB
(86) Internationale Anmeldenummer: PCT/EP2020/071597
(87) Internationale Veröffentlichungsnummer: WO 2021/089206

(56) Entgegenhaltungen:
- EP-A1- 2 954 977
- US-A1- 2017 172 362
- US-A1- 2019 208 974

## Beschreibung

Die Erfindung betrifft eine Verbindungsanordnung mit den Merkmalen des Oberbegriffs von Anspruch 1. Zudem betrifft die Erfindung eine Werkzeugmaschine mit den Merkmalen des nebengeordneten Anspruchs. Schließlich betrifft die Erfindung ein Verlängerungsstück mit den Merkmalen des Oberbegriffs von Anspruch 20. Eine entsprechende Verbindungsanordnung sowie ein entsprechendes Verlängerungsstück sind aus EP 2 954 977 A1 bekannt.

Werkzeugmaschinen sind aus dem Stand der Technik bekannt, bspw. aus der auf die Anmelderin zurückgehenden DE 10 2007 012 394 A1. Darin ist eine handgeführte Werkzeugmaschine mit einem Griffstab beschrieben, der mehrere Griffstabteile aufweist, die mittels einer Spanneinrichtung miteinander verbindbar sind. Somit kann die Länge des Griffstabs zur Anpassung der Maschine an den Arbeitseinsatz verändert und der Griffstab zu Transportzwecken zerlegt werden. Dies begünstigt die Handhabung der Werkzeugmaschine.

Zum Verbinden bzw. zum Lösen der Griffstabteile sind mehrere Handgriffe nötig. So müssen die Griffstabteile zum Verbinden zusammengeführt und in dieser Stellung festgehalten werden, um danach die beiden Zuganker in Eingriff mit Hintergreifteilen zu bringen und diese mit den beiden Handbetätigungshebeln zu spannen. Zudem muss der elektrische Anschlussstecker auf Steckkontakte aufgebracht werden. Eine Demontage erfolgt in umgekehrter Reihenfolge, wobei hierzu ebenfalls mehrere Handgriffe erforderlich sind. Insoweit besteht Optimierungspotential.

Der Erfindung liegt die Aufgabe zugrunde, bei einer handgeführten Werkzeugmaschine die Handhabung mit einfachen konstruktiven Mitteln zu erleichtern, insbesondere deren Montage und Demontage.

Die Erfindung löst diese Aufgabe durch eine Verbindungsanordnung mit den Merkmalen des Anspruchs 1. Danach zeichnet sich die Verbindungsanordnung dadurch aus, dass innerhalb des jeweiligen (inneren) Querschnitts ein elektrischer Steckverbinder, ein mechanisches Spannelement und eine Anschlussöffnung zu einem im jeweiligen Verbindungsteil ausgebildeten Strömungskanal derart vorgesehen sind, dass beim Zusammenstecken der Verbindungsabschnitte die Spannelemente einander hintergreifen und die Steckverbinder miteinander verbunden werden (elektrische Steckverbindung) und/oder die Anschlussöffnungen miteinander verbunden werden (Strömungsverbindung).

Eine solche Ausgestaltung begünstigt eine schnelle und einfache Handhabung, da die in den Verbindungsabschnitten angeordneten Schnittstellen (mechanische Spannverbindung, elektrische Steckverbindung und/oder Strömungsverbindung zwischen den Strömungskanäle) beim Zusammenstecken der Verbindungsteile automatisch verbunden werden. Somit sind zum Verbinden bzw. zum Lösen der Verbindungsteile nur wenige Handgriffe erforderlich. Die Gefahr von Verletzungen oder Beschädigungen ist hiermit reduziert. Die Anordnung des Steckverbinders, des Spannelements und der Anschlussöffnung innerhalb des Querschnitts des betreffenden Verbindungsabschnitts trägt zu einer kompakten Ausgestaltung der Verbindungsanordnung bei, wobei die genannten Schnittstellen vor Umgebungseinflüssen wie Staub, Schmutz oder dgl. geschützt sind.

Bei der Werkzeugmaschine, die mit einer solchen Verbindungsanordnung ausgerüstet ist, kann es sich bspw. um eine handgeführte Werkzeugmaschine handeln. Unabhängig davon kann es sich bei der Verbindungsanordnung um eine Verbindungsleitung handeln, bspw. ein Schlauch oder ein Rohr.

Die Verbindungsteile können bspw. einen Rohrabschnitt aufweisen, wobei an einem Ende oder an beiden Enden des Rohrabschnitts ein Verbindungsabschnitt ausgebildet ist.

Bei dem weiteren Maschinenmodul kann es sich um ein Griffteil handeln. Optional kann das Griffteil Anzeigeelemente und/oder Bedienelemente zur Überwachung bzw. Bedienung der Werkzeugmaschine aufweisen. Bei dem (inneren) Querschnitt der Verbindungsteile kann es sich bspw. um einen Innenraum handeln.

Im Rahmen einer bevorzugten Ausgestaltung können die Verbindungsteile lösbar miteinander verbindbar sein. Somit kann die Verbindungsanordnung auf einfache Weise zusammengesetzt oder demontiert werden. Bspw. kann die Verbindungsanordnung zum Einsatz der Werkzeugmaschine montiert und zum Transport oder zur Lagerung demontiert werden.

In vorteilhafter Weise kann das Spannelement innerhalb des Querschnitts im Wesentlichen mittig angeordnet sein. Dies trägt zu einem (bezogen auf den Umfang) gleichmäßigen Verspannen der Verbindungsteile bei. "Im Wesentlichen mittig" kann dahingehend verstanden werden, dass das Spannelement in den mittleren 1 bis 30 Prozent des Innenquerschnitts angeordnet ist (bezogen auf die Querschnittsfläche), sozusagen in etwa auf halber Höhe des Querschnitts des Verbindungsabschnitts.

In zweckmäßiger Weise kann der Steckverbinder an einer Seite des Spannelements angeordnet sein und an der von dem Steckverbinder abgewandten Seite des Spannelements kann die Anschlussöffnung des Strömungskanals angeordnet sein. Dies trägt zu einer platzsparenden und symmetrischen Anordnung der Schnittstellen im Verbindungsabschnitt bei. Anders ausgedrückt kann das Spannelement zwischen Steckverbinder und Anschlussöffnung angeordnet sein. Das Spannelement kann an oder auf der Mittellängsachse des betreffenden Verbindungsteils angeordnet sein und der Steckverbinder und die Anschlussöffnung seitlich zur Mittellängsachse, insbesondere auf einander, vorzugsweise diametral, gegenüberliegenden Seiten.

Im Rahmen einer bevorzugten Ausgestaltung können die Verbindungsabschnitte jeweils eine einteilige oder mehrteilige Ummantelung aufweisen, die das jeweilige Verbindungsteil abschnittsweise einfasst. Hiermit können Enden der Verbindungsteile, bspw. Enden der Rohrabschnitte der Verbindungsteile, geschützt werden. Die Ummantelung kann bspw. hülsenförmig ausgebildet sein. Die Ummantelung kann bezogen auf das Verbindungsteil bzw. dessen Rohrabschnitt separat ausgebildet sein oder mit dem Verbindungsteil bzw. dessen Rohrabschnitt zusammenfallen, bspw. durch Ausgestaltung des Verbindungsteils als Hybridbauteil (Ummantelung ist direkt auf das Verbindungsteil bzw. dessen Rohrabschnitt aufgebracht).

In vorteilhafter Weise kann einer der Verbindungsabschnitte (Verbindungsabschnitt eines ersten Verbindungsteils), insbesondere an dessen Ummantelung, einen parallel zur Längsachse abragenden Bund aufweisen, mit dem dieser Verbindungsabschnitt beim Zusammenstecken den gegenüberliegenden Verbindungsabschnitt (Verbindungsabschnitt des anderen Verbindungsteils) umgreift. Somit ist ein Zusammenstecken vereinfacht, da die Verbindungsabschnitte hierbei durch den Bund geführt werden. Dabei können die Schnittstellen der Verbindungsabschnitte zueinander ausgerichtet werden. Der Bund trägt zum Schutz der Schnittstellen der Verbindungsabschnitte vor Umgebungseinflüssen bei. Der Bund ist vorzugsweise vollständig umlaufend ausgebildet.

In zweckmäßiger Weise kann der Bund eine sich nach außen erweiternde, insbesondere konisch ausgebildete, Innenfläche aufweisen und der gegenüberliegende Verbindungsabschnitt kann, insbesondere an dessen Ummantelung, eine sich nach außen verjüngende, insbesondere konisch verjüngende, Außenfläche aufweisen. Dies erleichtert ein Zusammenstecken der Verbindungsabschnitte, da die jeweiligen Schnittstellen der zusammenzusteckenden Verbindungsabschnitte (Steckverbinder, Spannelement und Anschlussöffnung) aufeinander ausgerichtet werden.

Im Rahmen einer bevorzugten Ausgestaltung können die Verbindungsabschnitte, insbesondere an deren Ummantelung, einen die Stirnseite des jeweiligen Verbindungsteils überdeckenden Auflageabschnitt aufweisen, wobei die Auflageabschnitte miteinander in Kontakt gelangen, wenn die Verbindungsabschnitte zusammengesteckt sind. Hiermit sind definierte Auflageabschnitte geschaffen, an denen die Verbindungsteile im zusammengesteckten Zustand miteinander in Kontakt sind. Somit kann bspw. ein direktes Aufliegen von Rohrabschnitten der Verbindungsteile aneinander verhindert werden. Verschleiß ist auf ein Minimum reduziert.

In vorteilhafter Weise kann der Verbindungsabschnitt, der beim Zusammenstecken durch den gegenüberliegenden Verbindungsabschnitt umgriffen wird, an seinem vom freien Ende des jeweiligen Verbindungsteils abgewandten Ende (rückwärtiges Ende) einen radial abragenden Absatz aufweisen. Dadurch kann das Risiko eines Eindringens von Fremdkörpern reduziert werden. Optional kann durch den Absatz ein Zusammenstecken von Verbindungsteilen in Einschubrichtung begrenzt werden. Der Absatz an sich kann einen dreieckförmigen oder trapezförmigen Querschnitt aufweisen. Hiermit kann ein allmählicher Übergang zwischen Verbindungsabschnitt und Verbindungsteil bzw. dessen Rohrabschnitt geschaffen werden. Dies begünstigt die Ergonomie.

In zweckmäßiger Weise können die Steckverbinder als mehrpolige Steckverbinder mit jeweils mindestens zwei Polen ausgebildet sein (zweipolige oder mehrpolige Ausgestaltung). Hiermit ist eine Übertragung von Strom (Energieversorgung) und Signalen möglich. Bspw. ist eine 7-polige bzw. 7-adrige Ausgestaltung der Steckverbinder denkbar.

Im Rahmen einer bevorzugten Ausgestaltung können der Steckverbinder, das Spannelement und/oder die Anschlussöffnung relativ zur Stirnseite des Verbindungsabschnitts bündig oder nach innen versetzt angeordnet sein. Anders ausgedrückt stehen diese Elemente stirnseitig nicht aus dem betreffenden Verbindungsabschnitt heraus. Dies bietet für die Schnittstellen einen gewissen Schutz vor Umgebungseinflüssen. Zudem lässt sich hiermit das Verletzungsrisiko für den Anwender reduzieren. Auch ein Verschleiß der Schnittstellen kann geringgehalten werden.

In vorteilhafter Weise kann zumindest einer der Steckverbinder jeweils mittels eines elastischen Elements am jeweiligen Verbindungsabschnitt oder am jeweiligen Verbindungsteil gelagert sein, insbesondere derart, dass der Steckverbinder relativ zum Verbindungsabschnitt oder zum Verbindungsteil beweglich ist. Die Steckverbinder weisen somit ein gewisses Spiel auf, damit die Verbindungsteile einfacher zusammengesteckt werden können.

Im Konkreten kann der Steckverbinder durch das elastische Element in eine, vorzugsweise mittige, Ausgangsstellung rückstellbar sein. Somit ist eine definierte Ausgangsstellung geschaffen. Sofern sich der Steckverbinder außermittig dreht, kann mittels des Rückstellelements eine Rückstellung in die Ausgangsstellung erfolgen.

Im Rahmen einer bevorzugten Ausgestaltung können im Steckverbinder, insbesondere angrenzend an dessen Steckkontakte, eine oder mehrere Staubabfuhröffnungen ausgebildet sein. Somit ist das Risiko, dass Staubablagerungen die Funktion der elektrischen Steckverbinder beeinträchtigen, reduziert. Die Staubabführöffnungen können mittels einer Strömungsverbindung mit dem im betreffenden Verbindungsteil ausgebildeten Strömungskanal (Absaugkanal) strömungsverbunden sein.

In zweckmäßiger Weise können die Steckverbinder der Verbindungsabschnitte eines ersten der Verbindungsteile und des zweiten Verbindungsteils teil- oder vollkomplementär zueinander ausgebildet sein. Somit können diese miteinander zusammengesteckt werden (teil- oder vollkomplementäre Ausgestaltung der Steckverbinder). Ein Steckverbinder eines Verbindungsabschnitts kann als Stecker ausgebildet sein und der Steckverbinder eines zweiten Verbindungsabschnitts als Buchse.

In vorteilhafter Weise können die Verbindungsteile jeweils eine sich parallel zu oder entlang deren Längsachse erstreckende Wandung aufweisen, die den Querschnitt der Verbindungsteile jeweils in separate Abschnitte unterteilt, wobei in einem ersten Abschnitt jeweils der Strömungskanal (Absaugkanal) angeordnet ist und der Steckverbinder und das Spannelement jeweils in einem weiteren Abschnitt angeordnet sind. Somit sind der Steckverbinder und das Spannelement von dem Strömungskanal getrennt und werden bspw. durch abgeführten Schleifstaub nicht beeinträchtigt.

Im Rahmen einer bevorzugten Ausgestaltung kann an wenigstens einem der Verbindungsabschnitte eine Betätigungseinrichtung angeordnet sein, die mittels einer Spanneinrichtung mit dem an diesem Verbindungsabschnitt angeordneten Spannelement gekoppelt ist, so dass die Verbindungsteile bei in Eingriff befindlichen Spannelementen durch Betätigung der Betätigungseinrichtung gegeneinander verspannbar sind. Somit ist eine einfache und schnelle Verspannung der Verbindungsteile miteinander ermöglicht. Bei der Betätigungseinrichtung kann es sich um einen (manuell betätigbaren) Spannhebel oder um einen (elektrisch oder elektronisch ansteuerbaren) Aktuator handeln.

In vorteilhafter Weise kann ein weiteres Verbindungsteil vorgesehen sein, welches an beiden Enden jeweils einen Verbindungsabschnitt aufweist, so dass das weitere Verbindungsteil als Verlängerungsstück zwischen die beiden Verbindungsteile eingefügt und, insbesondere lösbar, mit diesen verbunden werden kann. Somit können die Verbindungsanordnung bzw. die Werkzeugmaschine bei Bedarf in der Länge angepasst werden. Durch Einsetzen des weiteren Verbindungsteils kann eine Verlängerung und durch Entnahme des Verbindungsteils eine Verkürzung erfolgen.

Die Spannelemente können an einem Verbindungsabschnitt als Spannelement ausgebildet sein, wobei das Spannelement mit einer an diesem Verbindungsabschnitt angeordneten Spanneinrichtung und/oder Betätigungseinrichtung zusammenwirkt. Das Spannelement kann als Spannklaue ausgebildet sein. Am gegenüberliegenden Verbindungsabschnitt kann das Spannelement als Gegenelement ausgebildet sein, welches mit dem Spannelement (Spannklaue) eingreifen kann. Bei dem Gegenelement kann es sich um ein hakenförmiges Element oder einen Haken handeln.

Die eingangs genannte Aufgabe wird auch durch eine, vorzugsweise handgeführte, Werkzeugmaschine mit den Merkmalen des nebengeordneten Anspruchs gelöst. Die Werkzeugmaschine weist einen Bearbeitungskopf, ein weiteres Maschinenmodul und eine Verbindungsanordnung zur Verbindung von Bearbeitungskopf und dem Maschinenmodul wie voranstehend beschrieben auf. Bei der handgeführten Werkzeugmaschine kann es sich um eine Oberflächenbearbeitungsmaschine handeln, bspw. einen Langhalsschleifer. Der Bearbeitungskopf kann bspw. als Schleifkopf ausgebildet sein. Bei dem weiteren Maschinenmodul kann es sich bspw. um ein Griffteil handeln.

Hinsichtlich der mit der Werkzeugmaschine erzielbaren Vorteile sei auf die diesbezüglichen Ausführungen zur Verbindungsanordnung verwiesen. Zur weiteren Ausgestaltung der Werkzeugmaschine können die im Zusammenhang mit der Verbindungsanordnung beschriebenen Maßnahmen dienen.

Die eingangs genannte Aufgabe wird auch durch ein Verlängerungsstück für eine Verbindungsanordnung mit den Merkmalen des weiter nebengeordneten Anspruchs gelöst. Das Verlängerungsstück stellt ein weiteres Verlängerungsteil für eine Verbindungsanordnung dar, wie oben beschrieben.

Das Verlängerungsstück weist insbesondere an beiden Enden jeweils einen Verbindungsabschnitt auf, so dass das Verlängerungsstück zur Verlängerung zwischen die beiden Verbindungsteile eingefügt und mit diesen verbunden werden kann. Hinsichtlich der mit dem Verlängerungsstück erzielbaren Vorteile sei auf die diesbezüglichen Ausführungen zur Verbindungsanordnung verwiesen.

In vorteilhafter Weise kann das Verlängerungsstück für eine Verbindungsanordnung zur Verbindung eines Bearbeitungskopfs und eines weiteren Maschinenmoduls einer, vorzugsweise handgeführten, Werkzeugmaschine dienen. Das Verlängerungsstück weist an beiden Enden jeweils einen Verbindungsabschnitt auf, über den das Verlängerungsstück jeweils mit einem Verbindungsteil der Verbindungsanordnung verbindbar ist, wobei die Verbindungsabschnitte des Verlängerungsstücks jeweils einen inneren Querschnitt (bspw. Innenraum) nach außen hin begrenzen. Das Verlängerungsstück zeichnet sich dadurch aus, dass innerhalb des jeweiligen Querschnitts ein elektrischer Steckverbinder, ein mechanisches Spannelement und eine Anschlussöffnung zu einem im Verlängerungsstück ausgebildeten Strömungskanal vorgesehen sind. Auf diese Weise kann das Verlängerungsstück als (weiteres) Verbindungsteil genauso vorteilhaft mit einem Verbindungsteil verbunden werden wie die oben beschriebenen Verbindungsteile der Verbindungsanordnung.

Im Rahmen einer bevorzugten Ausgestaltung kann der elektrische Steckverbinder, das mechanische Spannelement und die Anschlussöffnung derart vorgesehen sein, dass beim Zusammenstecken eines Verbindungsabschnitts des Verlängerungsstücks mit einem Verbindungsteil der Verbindungsanordnung die Spannelemente einander hintergreifen und die Steckverbinder und/oder die Anschlussöffnungen jeweils miteinander verbunden werden. Dies begünstigt die Verbindbarkeit von Verlängerungsstück mit weiteren Verbindungsteilen.

In zweckmäßiger Weise können die Verbindungsabschnitte des Verlängerungsstücks komplementär (teilkomplementär oder vollkomplementär) zueinander ausgebildet sein. Mit anderen Worten könnten die beiden Verbindungsabschnitte des Verlängerungsstücks miteinander zusammengesteckt werden. Somit kann das Verlängerungsstück auf einfache Weise zwischen die weiteren Verbindungsteile der Verbindungsanordnung eingefügt werden. Auch ein Zusammenstecken mehrerer Verlängerungsstücke zur Verlängerung der Verbindungsanordnung ist denkbar.

In vorteilhafter Weise kann das Spannelement innerhalb des Querschnitts im Wesentlichen mittig angeordnet sein. Dies trägt zu einem (bezogen auf den Umfang) gleichmäßigen Verspannen des Verlängerungsstücks mit weiteren Verbindungsteilen bei. "Im Wesentlichen mittig" kann dahingehend verstanden werden, dass das Spannelement in den mittleren 1 bis 30 Prozent des Innenquerschnitts angeordnet ist (bezogen auf die Querschnittsfläche), sozusagen in etwa auf halber Höhe des Querschnitts des Verbindungsabschnitts.

In zweckmäßiger Weise kann der Steckverbinder an einer Seite des Spannelements angeordnet sein und an der von dem Steckverbinder abgewandten Seite des Spannelements kann die Anschlussöffnung des Strömungskanals angeordnet sein. Dies trägt zu einer platzsparenden und symmetrischen Anordnung der Schnittstellen im Verbindungsabschnitt bei. Anders ausgedrückt kann das Spannelement zwischen Steckverbinder und Anschlussöffnung angeordnet sein. Das Spannelement kann an oder auf der Mittellängsachse des Verlängerungsstücks angeordnet sein und der Steckverbinder und die Anschlussöffnung seitlich zur Mittellängsachsen, insbesondere auf einander vorzugsweise diametral gegenüberliegenden Seiten.

In zweckmäßiger Weise können die Steckverbinder als mehrpolige Steckverbinder mit jeweils mindestens zwei Polen ausgebildet sein (zweipolige oder mehrpolige Ausgestaltung). Hiermit ist eine Übertragung von Strom (Energieversorgung) und Signalen möglich. Bspw. ist eine 7-polige bzw. 7-adrige Ausgestaltung der Steckverbinder denkbar. Die an beiden Enden des Verlängerungsstücks angeordneten Steckverbinder sind mittels elektrischen oder elektronischen Leitungen elektrisch miteinander verbunden. Somit können mittels der elektrischen Steckverbinder Strom und/oder Steuersignale durch das Verlängerungsstück übertragen werden.

Im Rahmen einer bevorzugten Ausgestaltung können der Steckverbinder, das Spannelement und/oder die Anschlussöffnung relativ zur Stirnseite des Verbindungsabschnitts bündig oder nach innen versetzt angeordnet sein. Anders ausgedrückt stehen diese Elemente stirnseitig nicht aus dem betreffenden Verbindungsabschnitt heraus. Dies bietet für die Schnittstellen einen gewissen Schutz vor Umgebungseinflüssen. Zudem lässt sich hiermit das Verletzungsrisiko für den Anwender reduzieren. Auch ein Verschleiß der Schnittstellen kann geringgehalten werden.

In vorteilhafter Weise kann an einem der Verbindungsabschnitte eine Betätigungseinrichtung angeordnet sein, die mittels einer Spanneinrichtung mit dem an diesem Verbindungsabschnitt angeordneten Spannelement gekoppelt ist, so dass das Verlängerungsstück mit einem weiteren Verbindungsteil bei in Eingriff befindlichen Spannelementen durch Betätigung der Betätigungseinrichtung gegeneinander verspannbar sind. Somit ist eine einfache und schnelle Verspannung des Verlängerungsstücks mit einem weiteren Verbindungsteil ermöglicht. Bei der Betätigungseinrichtung kann es sich um einen (manuell betätigbaren) Spannhebel oder um einen (elektrisch oder elektronisch ansteuerbaren) Aktuator handeln.

Im Rahmen einer bevorzugten Ausgestaltung kann das Verlängerungsstück jeweils eine sich parallel zu oder entlang der Längsachse erstreckende Wandung aufweisen, die den Querschnitt des Verlängerungsstücks in separate Abschnitte unterteilt, wobei in einem ersten Abschnitt der Strömungskanal angeordnet ist und der Steckverbinder und das Spannelement (beider Verbindungsabschnitte des Verlängerungsstücks) jeweils in einem weiteren Abschnitt angeordnet sind. Somit sind der Steckverbinder und das Spannelement von dem Strömungskanal getrennt und werden bspw. durch abgeführten Schleifstaub nicht beeinträchtigt.

Zur weiteren Ausgestaltung der Verbindungsabschnitte des Verlängerungsstücks können die im Zusammenhang mit der Verbindungsanordnung beschriebenen Maßnahmen dienen.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Fig.1: eine Ausführungsform einer handgeführten Werkzeugmaschine und eine Verbindungsanordnung mit zwei Verbindungsteilen in einer perspektivischen Ansicht;
- Fig.2: die Werkzeugmaschine aus Figur 1, wobei in der Verbindungsanordnung als weiteres Verbindungsteil ein Verlängerungsstück eingesetzt ist;
- Fig.3: zwei zusammengesteckte Verbindungsabschnitte zweier benachbarter Verbindungsteile gemäß Detail A in Figur 2 in einer vergrößerten Ansicht;
- Fig.4: die Verbindungsabschnitte aus Figur 3 in einem nicht zusammengesteckten Zustand in einer perspektivischen Draufsicht;
- Fig.5: die Verbindungsabschnitte aus Figur 3 mit Blick ins Innere der Verbindungsabschnitte bzw. der jeweiligen Verbindungsteile;
- Fig.6: die Verbindungsabschnitte bzw. Verbindungsteile aus Figur 3 in einem teilweisen Längsschnitt;
- Fig.7: die Verbindungsabschnitte bzw. Verbindungsteile aus Figur 3 in einem Längsschnitt, wobei die Schnittebene parallel zur Wandung angeordnet ist, die den Querschnitt der Verbindungsteile in zwei separate Abschnitte trennt;
- Fig.8: eine Schnittdarstellung ähnlich Figur 7, wobei die Schnittebene so angeordnet ist, dass diese die Querbolzen schneidet;
- Fig.9: die zusammengesteckten Verbindungsabschnitte gemäß Figur 3 in einem Längsschnitt, wobei die Schnittebene das Spannelement und das Gegenelement schneidet;
- Fig.10: Spanneinrichtung, Spannelement und Gegenelement der Verbindungsanordnung gemäß Figur 3 in Alleinstellung;
- Fig.11: die Verbindungsabschnitte gemäß Figur 3 in nicht zusammengestecktem Zustand in einem Längsschnitt, wobei die Schnittebene das Spannelement und das Gegenelement schneidet;
- Fig.12: die zusammengesteckten Verbindungsabschnitte gemäß Figur 3 in einer Seitenansicht;
- Fig.13: das Gegenelement und den Steckverbinder der Verbindungsanordnung gemäß Figur 3 in Alleinstellung;
- Fig.14: das Verlängerungsstück der Verbindungsanordnung aus Figur 2 in Alleinstellung in einer perspektivischen Ansicht;
- Fig.15: das Verlängerungsstück gemäß Figur 14 mit Blick auf einen der Verbindungsabschnitte;
- Fig.16: das Verlängerungsstück gemäß Figur 14 mit Blick auf den anderen Verbindungsabschnitt; und
- Fig.17: das Verlängerungsstück gemäß Figur 14 in einem Halbschnitt.

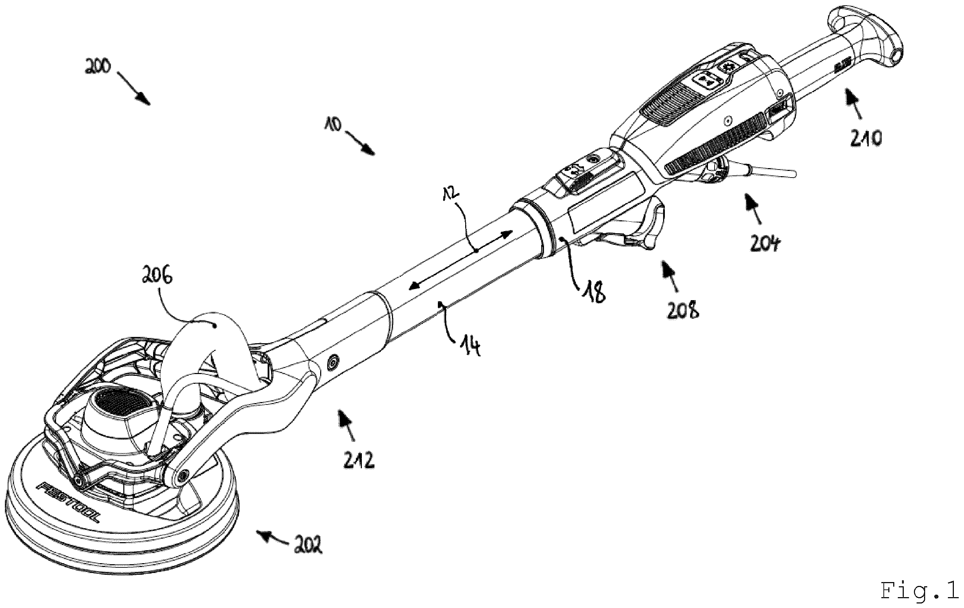

Figur 1 zeigt eine handgeführte Werkzeugmaschine, die insgesamt mit dem Bezugszeichen 200 bezeichnet ist (nachfolgend "Werkzeugmaschine"). Die Werkzeugmaschine 200 ist hier beispielhaft als Oberflächenbearbeitungsmaschine 200 in Form eines Langhalsschleifers ausgebildet.

Die Werkzeugmaschine 200 weist einen Bearbeitungskopf 202 in Form eines Schleifkopfs 202 auf. Zudem weist die Werkzeugmaschine 200 ein weiteres Maschinenmodul 204 in Form eines Griffteils 204 auf. Weiter verfügt die Werkzeugmaschine 200 über eine Verbindungsanordnung 10 zur Verbindung von Schleifkopf 202 und Griffteil 204.

Am Schleifkopf 202 ist ein Schlauchabschnitt 206 angeordnet, der einends mit einer am Schleifkopf 202 befindlichen Absaugstelle (nicht dargestellt) strömungsverbunden ist. Der Schlauchabschnitt 206 ist andernends mit einem am Griffteil 204 angeordneten Schlauchaustritt 208 strömungsverbunden, und zwar mittels der Verbindungsanordnung 10. An den Schlauchaustritt 208 kann ein Schlauch (bspw. Saugschlauch) angeschlossen sein, der andernends bspw. an einen Staubsauger angeschlossen sein kann (nicht dargestellt). Somit kann am Schleifkopf 202 entstehender Schleifstaub an der Absaugstelle abgesaugt und über den Schlauchabschnitt 206, die Verbindungsanordnung 10 (Strömungskanal bzw. Absaugkanal) und den Schlauchaustritt 208 abgeführt werden.

Am Schleifkopf 202 befinden sich zudem stromführende Leitungen (Bereitstellung elektrischer Energie; ohne Bezugszeichen) und Steuerleitungen (Bereitstellung von Steuersignalen; ohne Bezugszeichen). Die Leitungen bzw. Steuerleitungen sind einends elektrisch oder elektronisch mit am Schleifkopf 202 angeordneten Komponenten verbunden. Andernends sind diese Komponenten elektrisch oder elektronisch mit am Griffteil 204 angeordneten Steuer- und Versorgungseinrichtungen verbunden (ohne Bezugszeichen), und zwar über die Verbindungsanordnung 10 (elektrische Steckverbindung). Der Griffteil 204 kann einen Griffabschnitt 210 aufweisen, an dem der Griffteil 204 händisch durch einen Benutzer gegriffen oder umgriffen werden kann.

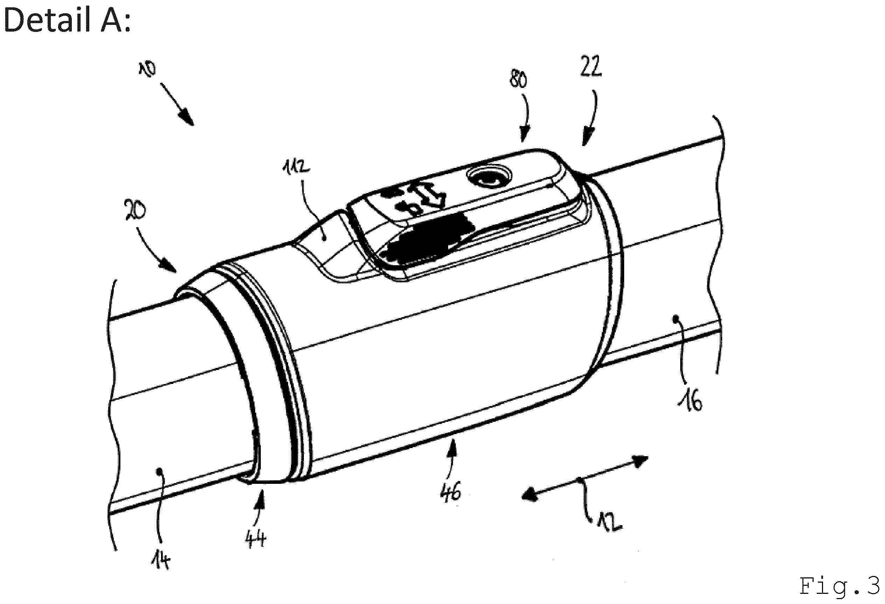

Die Verbindungsanordnung 10 kann ein Verbindungsteil 14 und ein weiteres Verbindungsteil 18 aufweisen, die miteinander verbunden und voneinander gelöst werden können (siehe Figur 1). Anders ausgedrückt sind die Verbindungsteile 14, 18 lösbar miteinander verbindbar. Das Verbindungsteil 18 ist am Griffteil 204 ausgebildet und weist einen Verbindungsabschnitt auf, der dem nachfolgend beschriebenen Verbindungsabschnitt 22 entsprecht (siehe Figur 3f.). Das Griffteil 204 bzw. dessen Verbindungsabschnitt können bspw. aus Kunststoff ausgebildet sein.

Das Verbindungsteil 14 weist einends einen nachfolgend beschriebenen Verbindungsabschnitt 20 auf (vgl. Figur 3f.), der mit dem am Griffteil 204 ausgebildeten Verbindungsabschnitt (ohne Bezugszeichen) zusammengesteckt werden kann. Andernends ist das Verbindungsteil 14 mit einem Anschlussstück 212 verbunden, welches den Schleifkopf 202 trägt.

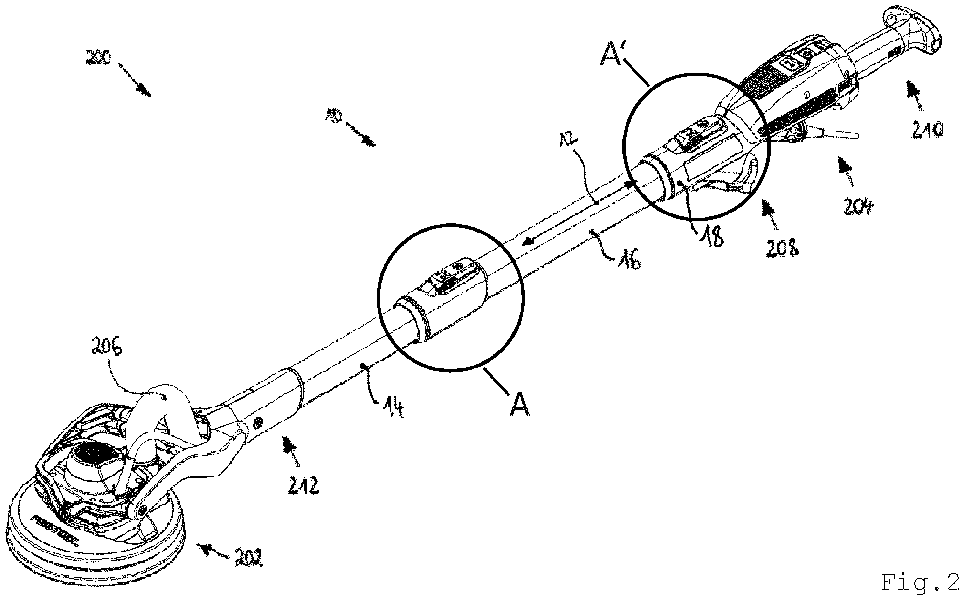

Optional kann die Verbindungsanordnung 10 zumindest ein weiteres Verbindungsteil 16 aufweisen, welches zwischen die beiden anderen Verbindungsteile 14, 18 als Verlängerungsstück 16 eingefügt werden kann (siehe Figur 2). Hierzu weist das Verlängerungsstück 16 an einem Ende einen Verbindungsabschnitt 20 und am anderen Ende einen Verbindungsabschnitt 22 auf, wie weiter unten noch beschrieben wird.

Die Verbindungsanordnung 10 wird nachfolgend genauer beschrieben, und zwar unter Bezugnahme auf den Verbindungsabschnitt 20 des Verbindungsteils 14 und den Verbindungsabschnitt 22 des Verbindungsteils 16 (vgl. Markierung "A" in Figur 2 und Figur 3f.). Eine entsprechende Verbindungsanordnung 10 befindet sich zwischen dem Verbindungsteil 14 und dem Verbindungsteil 18 bzw. zwischen dem Verbindungsteil 16 und dem Verbindungsteil 18 (vgl. Markierung "A'", lediglich in Figur 2 angedeutet).

Die Verbindungsanordnung 10 bildet insgesamt eine Verbindungsleitung aus, bspw. ein Verbindungsrohr. Die Verbindungsteile 14, 16 weisen jeweils einen Rohrabschnitt auf, bspw. ein Abschnitt eines Aluminiumrohrs, an dem jeweils ein Verbindungsabschnitt 20, 22 ausgebildet ist.

Wie bereits angedeutet, dient die Verbindungsanordnung 10 zur Verbindung des Schleifkopfs 202 und des Griffteils 204 der handgeführten Werkzeugmaschine 200 in Form eines Langhalsschleifers. Die Verbindungsanordnung 10 weist hierzu (mindestens) zwei entlang einer Längsachse 12 aufeinander folgende Verbindungsteile 14, 16 auf (vgl. Figur 3f.). Die Verbindungsteile 14, 16 sind lösbar miteinander verbindbar.

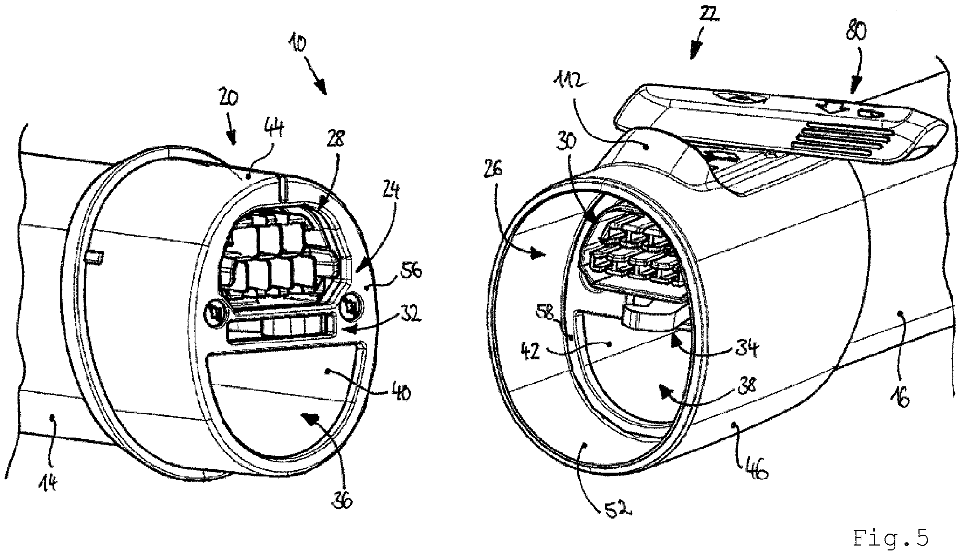

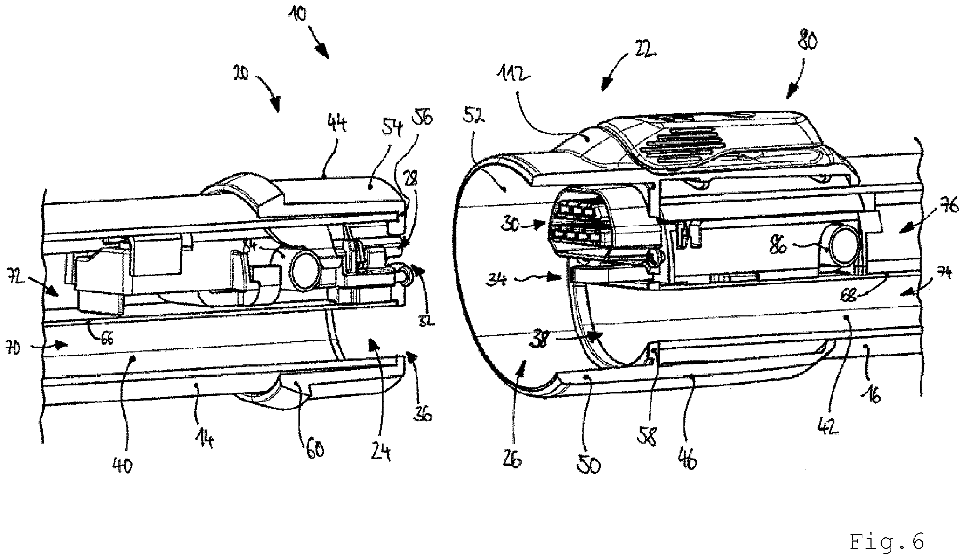

Das Verbindungsteil 14 weist einen Verbindungsabschnitt 20 auf. Das Verbindungsteil 16 weist einen Verbindungsabschnitt 22 auf. Über die Verbindungsabschnitte 20, 22 sind die Verbindungsteile 14, 16 miteinander verbindbar, und zwar durch Zusammenstecken der Verbindungsabschnitte 20, 22. Die Verbindungsabschnitte 20, 22 begrenzen jeweils einen inneren Querschnitt 24, 26 nach außen hin (siehe u.a. Figur 5 und 6).

An den Verbindungsabschnitten 20, 22 verfügen die Verbindungsteile 14, 16 jeweils über drei unterschiedliche Schnittstellen, die jeweils im inneren Querschnitt 24, 26 bzw. im Innenraum 24, 26 des betreffenden Verbindungsabschnitts 20, 22 angeordnet sind. Bei den Schnittstellen handelt es sich um eine elektrische Steckverbindung, eine mechanische Spannverbindung und eine Strömungsverbindung. Die Spannverbindung ist räumlich zwischen der Steckverbindung und der Strömungsverbindung angeordnet und befindet sich in etwa im Zentrum der Verbindungsabschnitte.

Das Verbindungsteil 14 weist im inneren Querschnitt 24 einen elektrischen Steckverbinder 28 auf, der eine Komponente der elektrischen Steckverbindung bildet. Der Steckverbinder 28 kann bspw. als Steckbuchse (weiblicher Teil) ausgebildet sein. Zudem weist das Verbindungsteil 14 ein Spannelement in Form eines Gegenelements 32 auf, welches eine Komponente der mechanischen Spannverbindung bildet. Das Gegenelement 32 kann bspw. als hakenförmiges Element oder Haken 32 ausgebildet sein. Das Verbindungsteil 14 weist zudem eine Anschlussöffnung 36 zu einem im Verbindungsteil 14 ausgebildeten Strömungskanal 40 auf (Absaugkanal), wodurch ein Teil der Strömungsverbindung gebildet ist.

Das Verbindungsteil 16 weist im inneren Querschnitt 26 einen elektrischen Steckverbinder 30 auf, der eine Komponente der elektrischen Steckverbindung bildet. Der Steckverbinder 30 kann bspw. als Stecker (männlicher Teil) ausgebildet sein. Zudem weist das Verbindungsteil 16 ein Spannelement 34 auf, welches eine Komponente der mechanischen Spannverbindung bildet. Das Spannelement 34 kann bspw. als klauenförmiges Element oder Spannklaue 34 ausgebildet sein. Das Spannelement 34 ist mittels einer Betätigungseinrichtung in Form eines Spannhebels 80 betätigbar. Das Verbindungsteil 16 weist zudem eine Anschlussöffnung 38 zu einem im Verbindungsteil 14 ausgebildeten Strömungskanal 42 auf, wodurch ein Teil der Strömungsverbindung gebildet ist.

Im Folgenden wird das Verbindungsteil 14 näher beschrieben. Wie bereits angedeutet, weist das Verbindungsteil 14 einen Rohrabschnitt auf, wobei an einem von dessen Enden der Verbindungsabschnitt 20 angeordnet ist. Der Verbindungsabschnitt 20 weist eine Ummantelung 44 auf, die das Verbindungsteil 14 (an seinem freien Ende) abschnittsweise einfasst (siehe Figur 5 und 6). Stirnseitig weist die Ummantelung 44 drei Durchgänge (ohne Bezugszeichen) für den elektrischen Steckverbinder 28, das Gegenelement 32 und die Anschlussöffnung 36 auf.

Die Ummantelung 44 weist eine sich nach außen, d.h. zum freien Ende hin verjüngende, insbesondere konisch verjüngende, Außenfläche 54 auf. Zudem weist die Ummantelung 44 einen die Stirnseite des Verbindungsteils 14 (stirnseitiges Ende des Rohrabschnitts) überdeckenden Auflageabschnitt 56 auf. Im zusammengesteckten Zustand der Verbindungsteile 14, 16 kann der Auflageabschnitt 56 mit einem Auflageabschnitt 58 des Verbindungsteils 16 in Kontakt gelangen. An seinem vom freien Ende des Verbindungsteil 14 abgewandten Ende weist die Ummantelung 44 einen radial abragenden Absatz 60 auf. Der Absatz 60 kann ein Zusammenstecken der Verbindungsabschnitte 20, 22 in Einschubrichtung begrenzen. Unabhängig davon realisiert der Absatz 60 einen sanften Übergang der Kontur von der Ummantelung 44 auf den Rohrabschnitt des Verbindungsteils 14.

Im Rohrabschnitt des Verbindungsteils 14 ist eine sich parallel zu oder entlang der Längsachse 12 erstreckende Wandung 66 vorgesehen, die den (inneren) Querschnitt des Verbindungsteils 14 in zwei separate Abschnitte 70, 72 unterteilt. In dem ersten Abschnitt 70 ist der Strömungskanal 40 angeordnet. In dem weiteren Abschnitt 72 sind das Gegenelement 32 und der elektrische Steckverbinder 28 angeordnet.

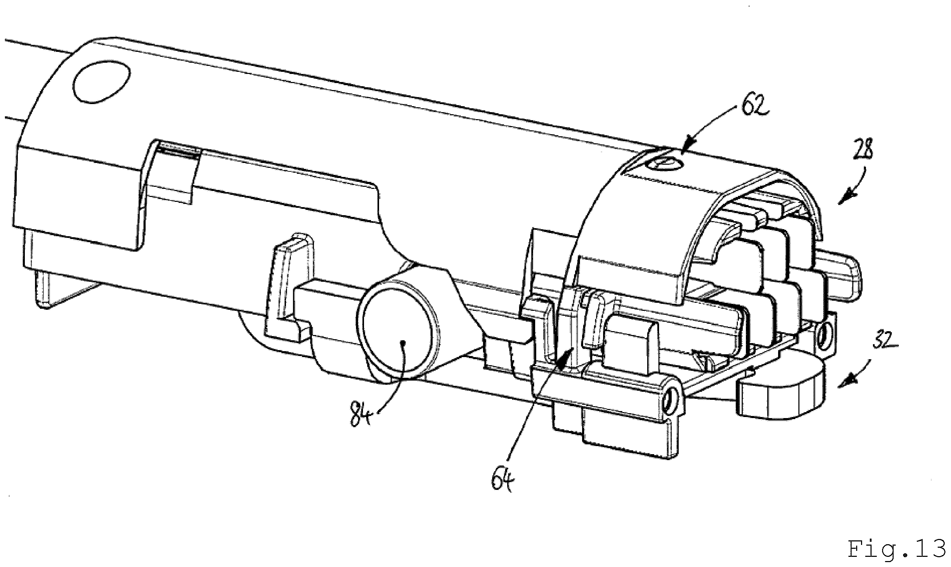

Der Steckverbinder 28 ist mittels eines elastischen Elements 64 am Verbindungsteil 14 gelagert (siehe Figur 13). Aufgrund des elastischen Elements 64 ist der Steckverbinder 28 relativ zum Verbindungsabschnitt 20 oder zum Verbindungsteil 14 beweglich. Mittels des elastischen Elements 64 ist der Steckverbinder 28 in eine, vorzugsweise mittige, Ausgangsstellung rückstellbar. Sofern sich der Steckverbinder 28 außermittig gedreht hat, kann dieser durch das elastische Element 64 zurückgestellt werden. Optional können am Steckverbinder 28 Staubabführöffnungen ausgebildet sein (nicht dargestellt). Diese reduzieren Staubablagerungen am Steckverbinder 28. Die Staubabführöffnungen können mit dem Strömungskanal 40 strömungsverbunden sein.

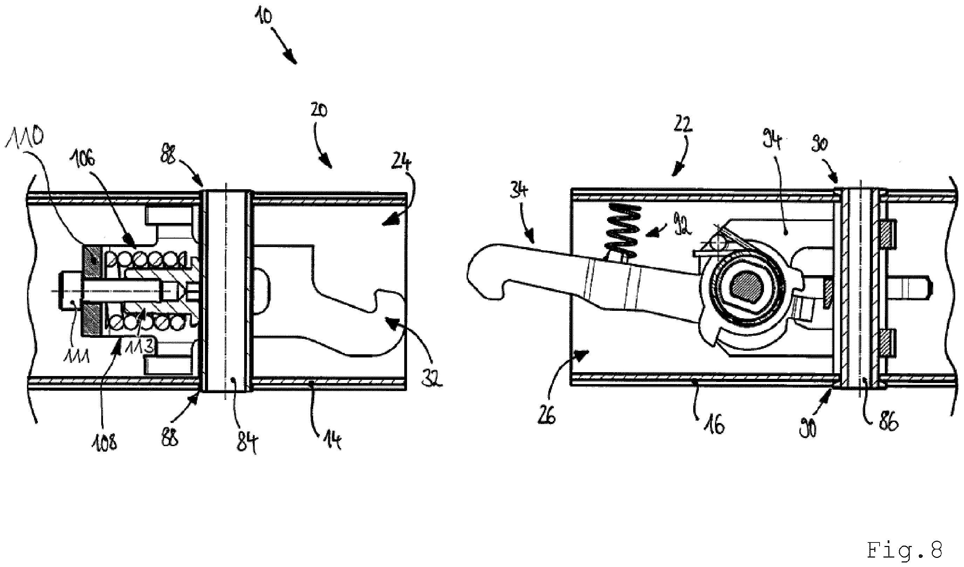

Das Gegenelement 32 ist mittels eines Querbolzens 84 am Verbindungsteil 14 festgelegt (vgl. u.a. Figur 6 bis 10 und 13). Der Querbolzen 84 ragt quer zur Längsachse 12 durch den Querschnitt 24 des Verbindungsteils 14. Mit seinen Enden greift der Querschnitt 84 jeweils in einen in der Wandung des Verbindungsteils 14 (Wandung des Rohrabschnitts) ausgebildeten Durchgang 88 ein (siehe Figur 8) .

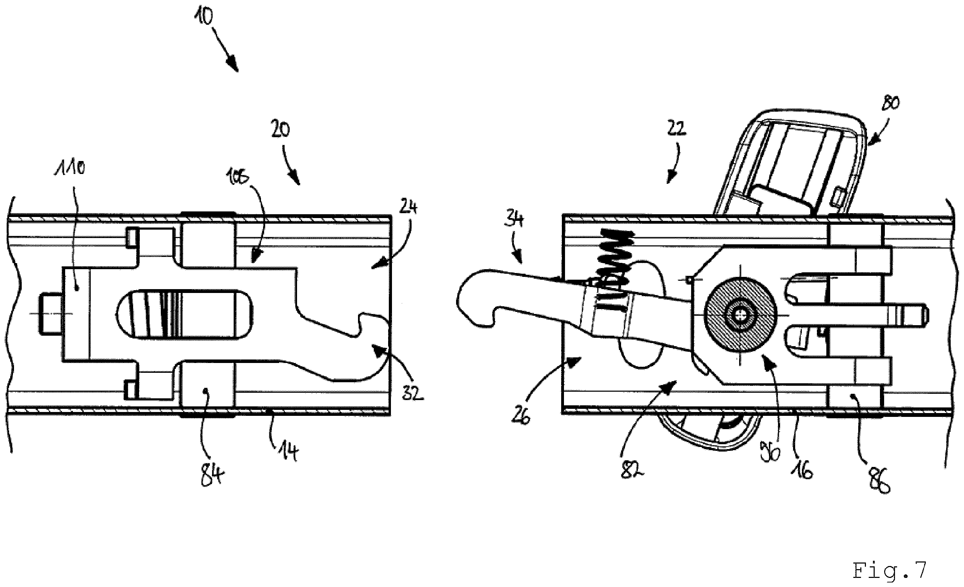

Das Gegenelement 32 ist verschieblich am Verbindungsteil 14 geführt und durch Zwischenschaltung einer Feder 106 verschieblich am Verbindungsteil 14 gelagert. Das (hakenförmige) Gegenelement 32 geht in einen Halteabschnitt 108 über, wobei der Halteabschnitt 108 einen abgewinkelten Abschnitt 110 aufweist (siehe u.a. Figur 7 und 8). Die Feder 106 ist zwischen dem abgewinkelten Abschnitt 110 und dem Querbolzen 84 angeordnet (siehe Figur 8). Die Feder 106 ist mittels einer Schraube 11 am abgewinkelten Abschnitt 110 befestigt, wobei auf die Schraube eine Führungsbüchse 113 aufgeschraubt ist, die die Feder 106 führt. Die Feder 106 ist insbesondere als Druckfeder 106 ausgebildet.

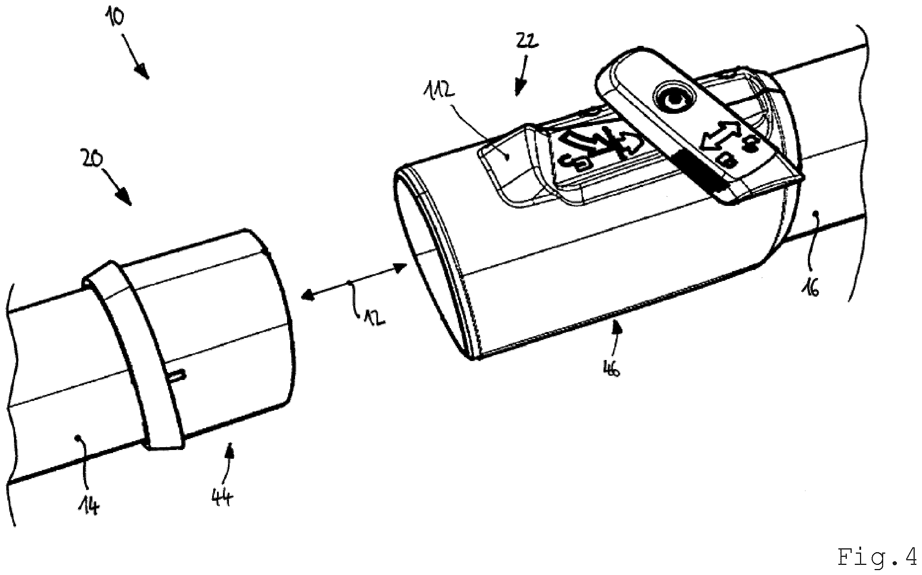

Im Folgenden wird das Verbindungsteil 16 näher beschrieben. Wie bereits angedeutet, weist das Verbindungsteil 16 einen Rohrabschnitt auf, wobei an einem von dessen Enden der Verbindungsabschnitt 22 angeordnet ist. Der Verbindungsabschnitt 22 weist eine Ummantelung 46 auf, die das Verbindungsteil 16 (an seinem hier gezeigten freien Ende) abschnittsweise einfasst (siehe Figur 4f.). Stirnseitig weist die Ummantelung 46 mehrere Durchgänge (ohne Bezugszeichen) für den elektrischen Steckverbinder 30, das Spannelement 34 und die Anschlussöffnung 38 auf.

Die Ummantelung 46 weist einen parallel zur Längsachse 12 abragenden Bund 50 auf (siehe Figur 6), mit dem der Verbindungsabschnitt 22 beim Zusammenstecken der Verbindungsteile 14, 16 den gegenüberliegenden Verbindungsabschnitt 20 umgreift. Der Bund 50 weist eine sich nach außen erweiternde, insbesondere konisch erweiternde, Innenfläche 52 auf. Die Innenfläche 52 ist insbesondere korrespondierend zur sich konisch verjüngenden Außenfläche 44 des Verbindungsabschnitts 20 ausgebildet.

Der Verbindungsabschnitt 22 weist an der Ummantelung 46 einen die Stirnseite des Verbindungsteils 16 (stirnseitiges Ende des Rohrabschnitts) überdeckenden Auflageabschnitt 58 auf. Der Auflageabschnitt 58 kann mit dem Auflageabschnitt 56 des Verbindungsabschnitts 20 in Kontakt gelangen, wenn die Verbindungsteile 14, 16 miteinander zusammengesteckt sind.

Am Verbindungsabschnitt 22 ist an der Ummantelung 46 ein Vorsprung 112 vorgesehen, der als Nase ausgebildet sein kann. Der Vorsprung 112 ist derart ausgebildet, dass sich dieser dann, wenn sich der Spannhebel 80 in der Stellung befindet, in der das Spannelement 34 gespannt ist, an ein freies Ende des Spannhebels 80 anschließt. Dabei setzt der Vorsprung 112 die Kontur des Spannhebels 80 fort (siehe insbesondere Figur 6).

Am Verbindungsabschnitt 22 des Verbindungsteils 16 ist eine betätigbare Spanneinrichtung 82 vorgesehen, die auf das Spannelement 34 wirkt (siehe insbesondere Figur 7). Das Spannelement 34 und das Gegenelement 32 sind derart ausgebildet, dass diese beim Zusammenstecken der Verbindungsabschnitte 20, 22 miteinander in Eingriff bringbar sind. Durch Betätigen der Spanneinrichtung 82 sind die Verbindungsteile 14, 16 bei Eingriff des Spannelements 34 mit dem Gegenelement 32 gegeneinander verspannbar.

Die Spanneinrichtung 82 ist mittels des von Hand betätigbaren Spannhebels 80 betätigbar. Zudem ist die Spanneinrichtung 82 derart ausgebildet, dass zum Verspannen der Verbindungsteile 14, 16 mittels Spannelement 34 und Gegenelement 32 lediglich der Spannhebel 80 betätigt werden muss.

Das Spannelement 34 ist drehbeweglich an der Spanneinrichtung 82 gelagert und relativ zum Gegenelement 32 vorgespannt. Dadurch gelangen das Spannelement 34 und das Gegenelement 32 beim Zusammenstecken der Verbindungsabschnitte 20, 22 miteinander in Eingriff. Hierzu ist eine Feder 92 vorgesehen, die auf das Spannelement 34 wirkt und sich bspw. an der Innenwand des Rohrabschnitts des Verbindungsteils 16 abstützt (siehe insbesondere Figur 8). Bei der Feder 92 handelt es sich insbesondere um eine Druckfeder 92.

Das Spannelement 34 ist mittels eines Querbolzens 86 am Verbindungsteil 16 festgelegt. Der Querbolzen 86 erstreckt sich quer zur Längsachse 12 durch den Querschnitt 26 des Verbindungsteils 16. Mit seinen Enden greift der Querbolzen 86 jeweils in einen in der Wandung des Verbindungsteils 16 ausgebildeten Durchgang 90 ein (siehe Figur 8).

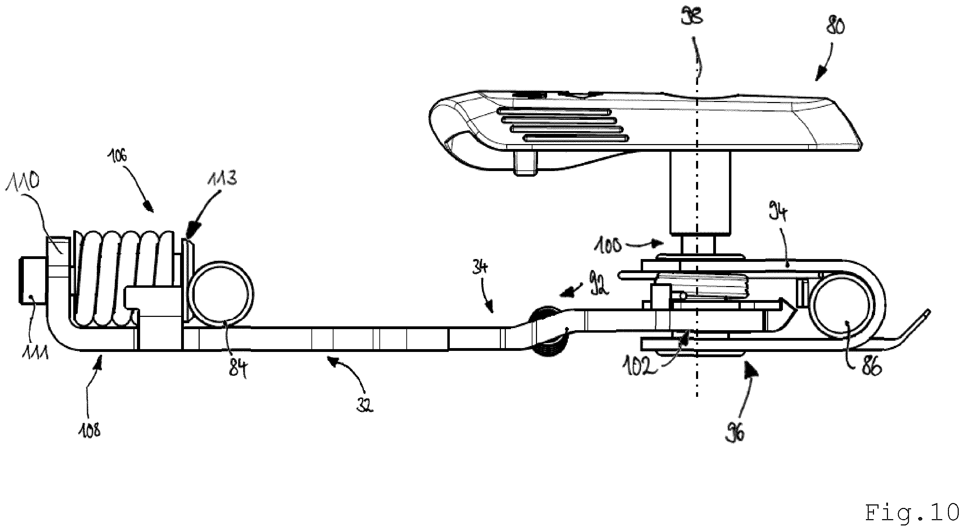

Die Spanneinrichtung 82 weist ein Lagerteil 94 auf, welches als im Querschnitt U-förmiges Lagerblech ausgebildet ist (siehe u.a. Figur 7 bis 10). Das Lagerteil 94 umschlingt den Querbolzen 86 und definiert eine von Querbolzen 86 beabstandete Lagerstelle 96 mit einer zur Mittellängsachse des Querbolzen 86 orthogonal orientierten Lagerachse 98 (siehe insbesondere Figur 10). Der Spannhebel 80 ist mittels einer Hebelwelle 100 schwenkbar an der Lagerstelle 96 des Lagerteils 94 gelagert, wobei das Spannelement 34 mittels eines Exzenters 102 mit der Hebelwelle 100 gekoppelt ist (siehe insbesondere Figuren 8 bis 10).

Die Spanneinrichtung 82 kann derart ausgebildet sein, dass der Spannhebel 80 nach einem Entspannen des Spannelements 34 in Öffnungsrichtung weiterbewegt werden kann (bspw. in Figur 4 im Gegenuhrzeigersinn), um das Spannelement 34 und das Gegenelement 32 außer Eingriff zu bringen, damit die Verbindungsteile 14, 16 voneinander gelöst werden können.

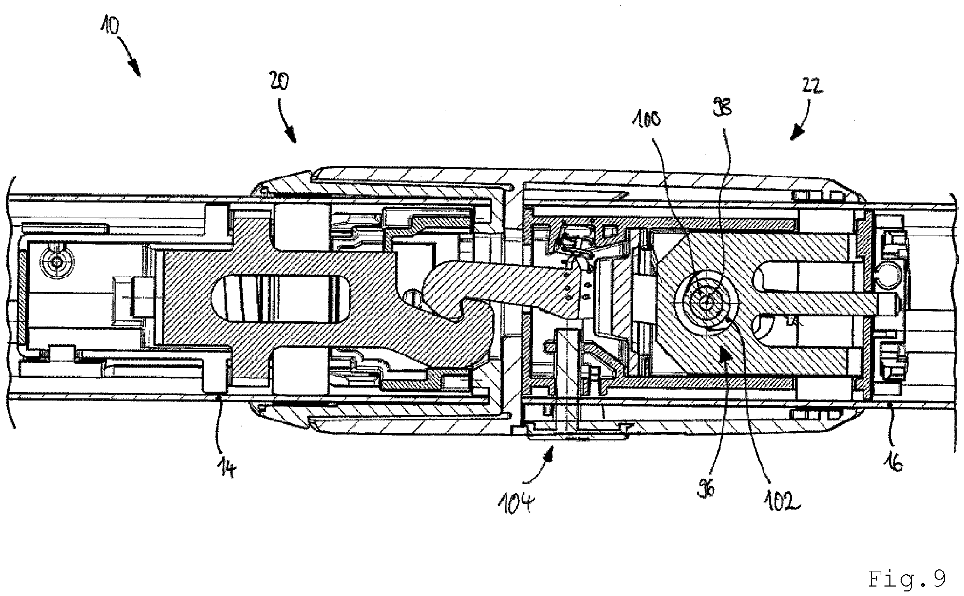

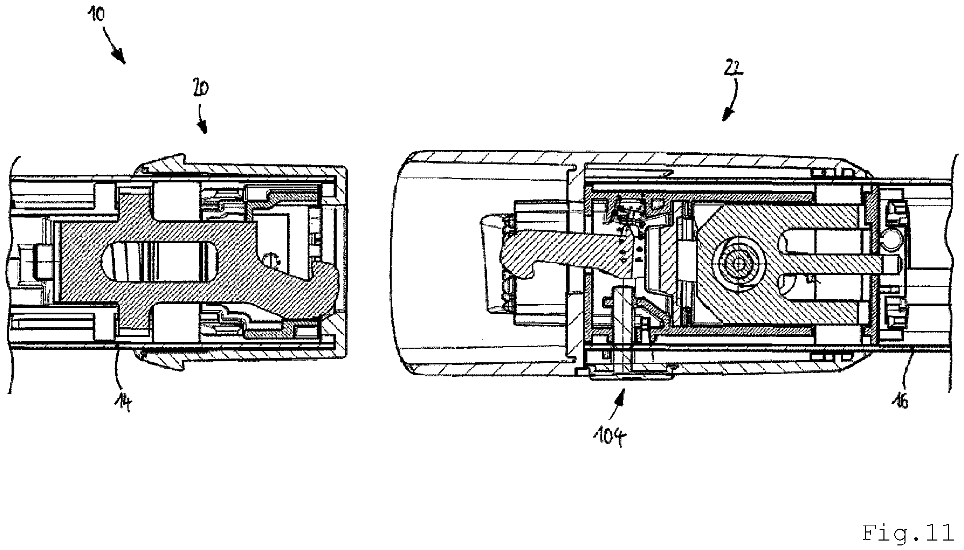

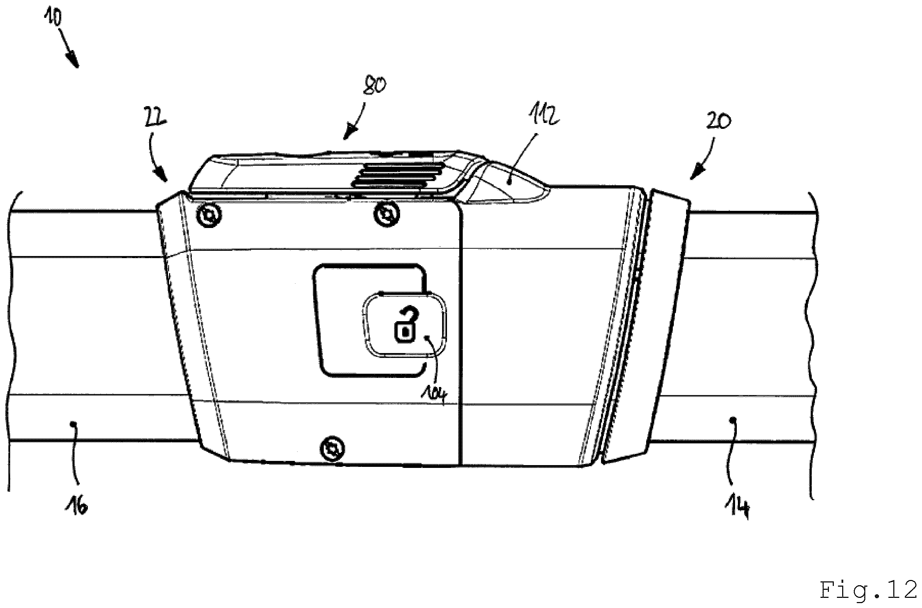

Optional kann am Verbindungsabschnitt 22 des Verbindungsteil 16 ein von Hand (bspw. per Finger) betätigbarer Taster 104 vorgesehen sein, der auf das Spannelement 34 wirkt, wobei durch Betätigung des Tasters 104 das Spannelement 34 und das Gegenelement 32 (bei gelöster Spanneinrichtung 82) außer Eingriff gebracht werden können (siehe Figuren 9, 11 und 12).

Im Rohrabschnitt des Verbindungsteils 16 ist eine sich parallel zu oder entlang der Längsachse 12 erstreckende Wandung 68 vorgesehen, die den (inneren) Querschnitt des Verbindungsteils 16 in zwei separate Abschnitte 74, 76 unterteilt. In dem ersten Abschnitt 74 ist der Strömungskanal 42 angeordnet. In dem weiteren Abschnitt 76 sind das Spannelement 34 bzw. die Spanneinrichtung 82 und der elektrische Steckverbinder 30 angeordnet (vgl. Figur 6) .

Der Steckverbinder 30 des Verbindungsteils 16 kann optional mittels eines elastischen Elements am Verbindungsteil 16 gelagert sein. Damit ist der Steckverbinder 30 relativ zum Verbindungsteil 16 beweglich (nicht dargestellt). Durch das elastische Element kann der Steckverbinder 30 in eine, vorzugsweise mittige, Ausgangsstellung zurückgestellt werden. Sofern sich der Steckverbinder 30 außermittig gedreht haben sollte, kann mittels des elastischen Elements eine Rückstellung in die Ausgangsstellung erfolgen.

Optional können im Steckverbinder 30, insbesondere angrenzend an dessen Steckkontakte, ein oder mehrere Staubabführöffnungen ausgebildet sein. Die Staubabführöffnungen können optional mit dem im Verbindungsteil 16 ausgebildeten Strömungskanal 42 strömungsverbunden sein.

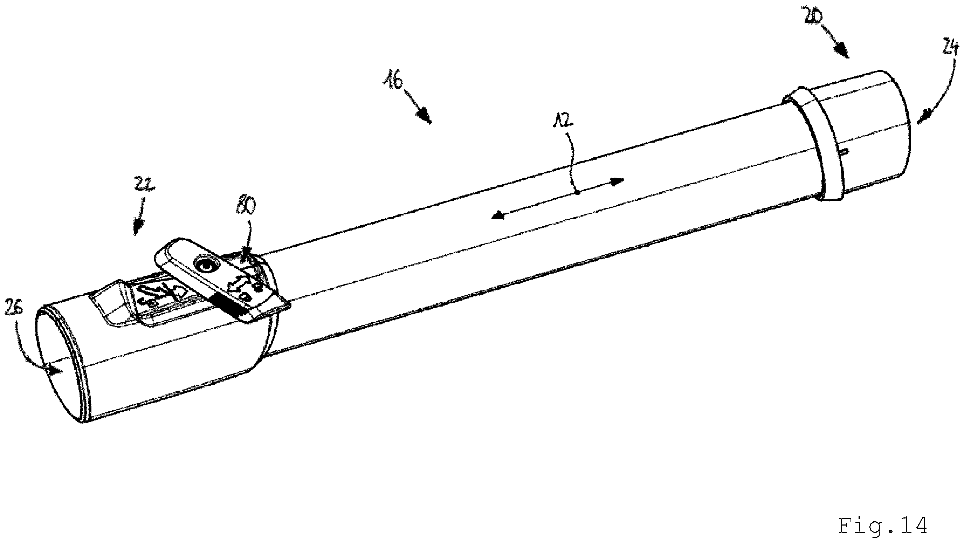

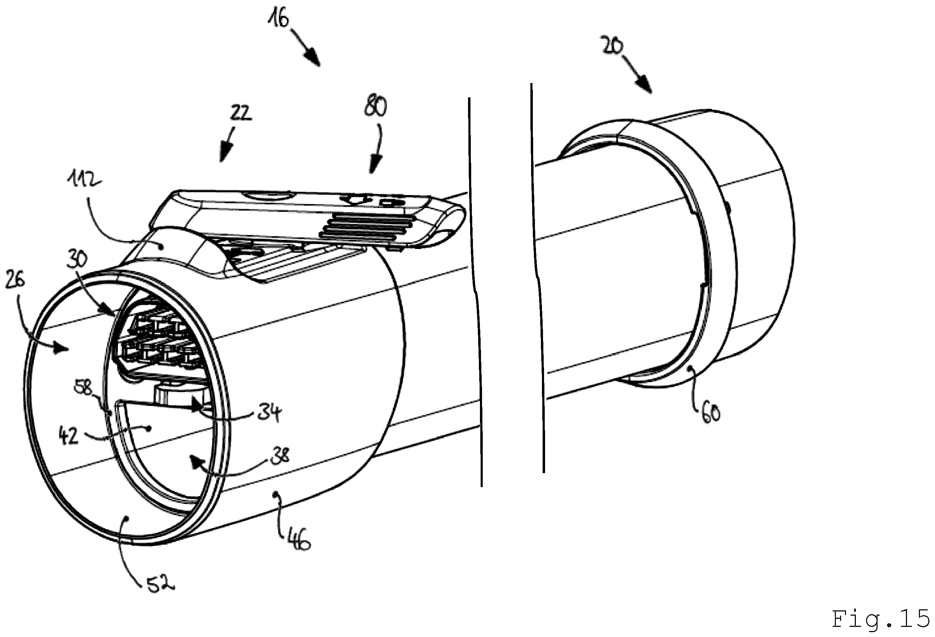

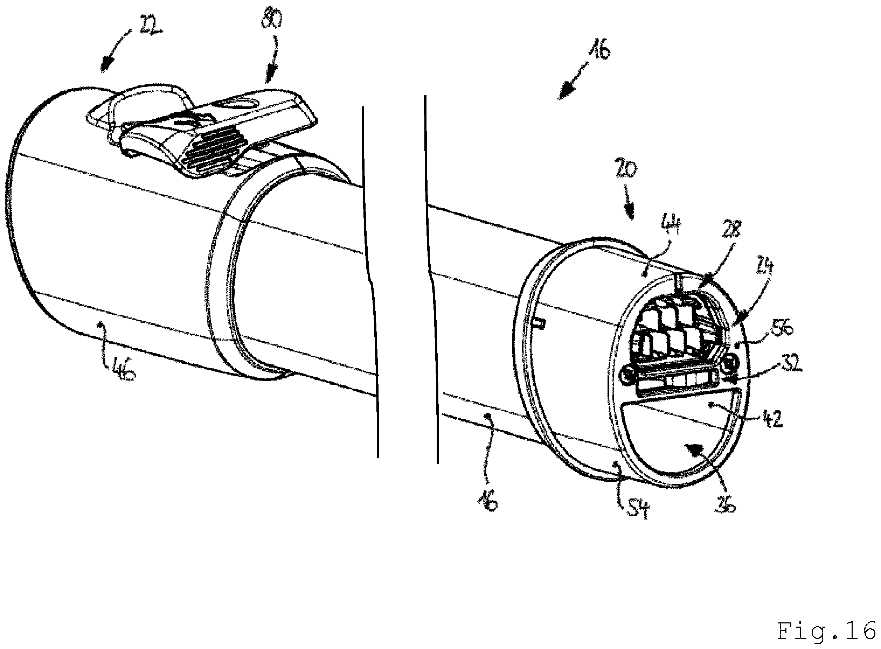

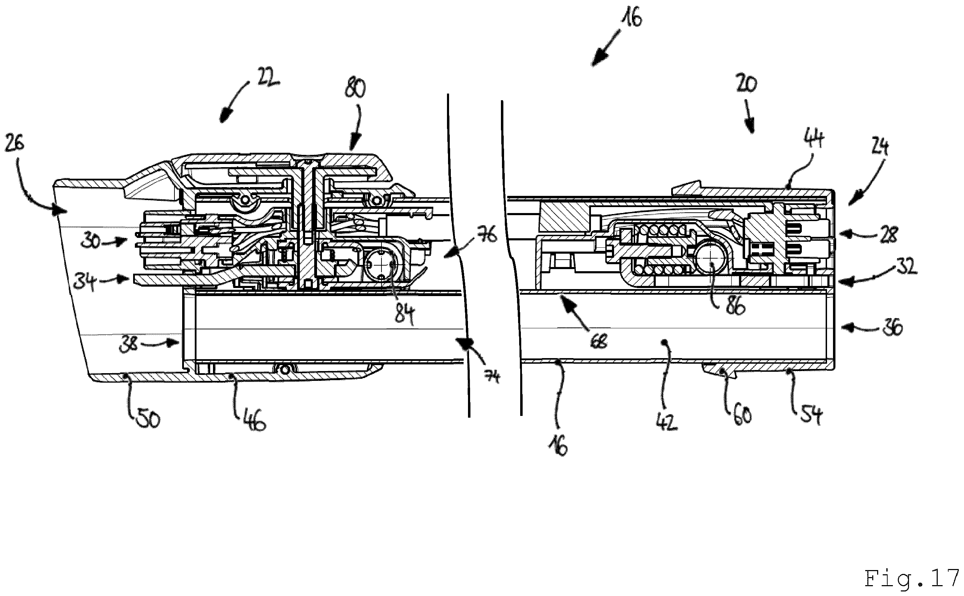

Die Figuren 14 bis 17 zeigen das als Verlängerungsstück ausgebildete Verbindungsteil 16 in Alleinstellung. Das Verlängerungsstück 16 erstreckt sich entlang einer Längsrichtung 12. Das Verlängerungsstück 16 weist ein Rohrabschnitt auf, welches an einem Ende (in Figur 14 links) den Verbindungsabschnitt 22 und am anderen Ende (in Figur 14 rechts) den Verbindungsabschnitt 20 aufweist.

Der Verbindungsabschnitt 22 des Verlängerungsstücks 16 ist entsprechend dem oben beschriebenen Verbindungsabschnitt 22 des Verbindungsteils 16 ausgebildet (gleiche oder funktional gleiche Elemente sind mit identischen Bezugszeichen versehen). Zur Vermeidung von Wiederholungen sei daher auf die obigen Ausführungen zum Verbindungsabschnitt 22 des Verbindungsteils 16 verwiesen.

Der Verbindungsabschnitt 20 des Verlängerungsstücks 16 ist entsprechend dem oben beschriebenen Verbindungsabschnitt 20 des Verbindungsteils 14 ausgebildet (gleiche oder funktional gleiche Elemente sind mit identischen Bezugszeichen versehen). Zur Vermeidung von Wiederholungen sei daher auf die obigen Ausführungen zum Verbindungsabschnitt 20 des Verbindungsteils 14 verwiesen.

Abweichend von den obigen Ausführungen ist Folgendes zu beachten: Im Rohrabschnitt des Verlängerungsstücks 16 ist eine sich parallel zu oder entlang der Längsachse 12 erstreckende Wandung 68 vorgesehen, die den Querschnitt des Verlängerungsstücks 16 in zwei separate Abschnitte 74, 76 unterteilt.

In dem ersten Abschnitt 74 ist der Strömungskanal 42 angeordnet. Der Strömungskanal 74 erstreckt sich zwischen dem Verbindungsabschnitt 22 und dem Verbindungsabschnitt 20 des Verlängerungsstücks 16. Die Anschlussöffnungen 36 und 38 münden beide in den Strömungskanal 42.

In dem weiteren Abschnitt 76 sind am Verbindungsabschnitt 20 der elektrische Steckverbinder 28 sowie das Gegenelement 32 und am Verbindungsabschnitt 22 das Spannelement 34 bzw. die Spanneinrichtung 82 sowie der elektrische Steckverbinder 30 angeordnet. Der elektrische Steckverbinder 28 und der elektrische Steckverbinder 30 sind mittels durch den weiteren Abschnitt 76 geführten elektrischen oder elektronischen Leitungen elektrisch bzw. elektronisch miteinander verbunden. Somit können mittels der elektrischen Steckverbinder 28, 30 Strom und/oder Steuersignale durch das Verlängerungsstück 16 übertragen werden.

Die Verbindungsanordnung 10 bzw. eine mit der Verbindungsanordnung 10 ausgestattete handgeführte Werkzeugmaschine arbeitet folgendermaßen (anhand der Verbindungsteile 14 und 16 erläutert):
Zum Verbinden werden die Verbindungsteile 14, 16 zunächst so zueinander positioniert, dass die Verbindungsabschnitte 20, 22 derart aufeinander ausgerichtet sind, dass die Verbindungsabschnitte 20, 22 zusammengesteckt werden können (vgl. bspw. Figur 4, 6 oder 11).

Anschließend werden die Verbindungsabschnitte 20, 22 zusammengesteckt und der Spannhebel 80 kann geschlossen werden (vgl. bspw. Figur 3 oder 9). Bereits beim Zusammenstecken gelangen das Spannelement 34 und das Gegenelemente 32 miteinander in Eingriff (Hintergriff), da das Spannelement 34 durch die Feder 92 relativ zum Gegenelemente 32 vorgespannt ist (vgl. bspw. Figur 8).

Zudem werden beim Zusammenstecken auch die Steckverbinder 28, 30 miteinander verbunden. Ist beim Zusammenstecken eine Endposition erreicht, bspw. dann, wenn der Auflageabschnitt 56 des Verbindungsabschnitts 20 mit dem Auflageabschnitt 58 des Verbindungsabschnitts 22 in Kontakt gelangt, sind auch die Anschlussöffnungen 36, 38 aufeinander ausgerichtet, so dass der Strömungskanal 40 und der Strömungskanal 42 miteinander strömungsverbunden sind.

Durch Verschwenken des Spannhebels 80 wird die Spanneinrichtung 82 betätigt, die auf das Spannelement 34 wirkt, welches mit dem Gegenelement 32 in Hintergriff ist (siehe Figur 9). Das Spannelement 34 wird hierdurch mittels des Exzenters 102 im Verbindungsteil 16 entlang der Längsrichtung 12 nach (axial) innen gezogen. Dadurch, dass die Verbindungsteile 14, 16 an den Verbindungsabschnitten 20, 22 aneinander anliegen, bspw. mittels der Aufgabeabschnitte 56, 58, und das Spannelement 34 eine Zugkraft auf das Gegenelement 32 aufbringt, sind die Verbindungsteile 14, 16 miteinander verspannt.

In diesem Zustand ist zwischen den Steckverbindern 28, 30 eine elektrische Steckverbindung hergestellt. Durch Gegenelement 32 und Spannelement 34 ist eine mechanische Spannverbindung hergestellt. Durch die zueinander ausgerichteten Anschlussöffnungen 36, 38 ist zudem eine Strömungsverbindung zwischen den Verbindungsteilen 14, 16 hergestellt.

Zum Lösen muss der Spannhebel 80 in Öffnungsrichtung verschwenkt werden, wodurch die Spanneinrichtung 82 betätigt wird und das Spannelement 34 entlastet (Zugkraft wird abgebaut). Das Spannelement 34 und das Gegenelement 32 sind noch in Hintergriff miteinander.

Um das Spannelement 34 und das Gegenelement 32 außer Eingriff zu bringen, muss der Spannhebel 80 in Öffnungsrichtung weiter verschwenkt werden oder alternativ der Taster 104 betätigt werden. Dadurch wird das Spannelement 34 so verschwenkt, dass dieses zum Gegenelement 32 außer Eingriff ist. Die mechanische Spannverbindung ist somit gelöst.

Anschließend können die Verbindungsteile 14, 16 voneinander getrennt bzw. auseinandergezogen werden. Dabei werden durch Trennen der elektrischen Steckverbinder 28, 20 und der Anschlussöffnungen 26, 38 auch die elektrische Steckverbindung und die Strömungsverbindung zwischen den Verbindungsteilen 14, 16 gelöst.

## Patentansprüche

1. Verbindungsanordnung (10) zur Verbindung eines Bearbeitungskopfs (202) und eines weiteren Maschinenmoduls (204) einer Werkzeugmaschine (200), insbesondere Oberflächenbearbeitungsmaschine (200), wobei die Verbindungsanordnung (10) mindestens zwei entlang einer Längsachse (12) aufeinander folgende Verbindungsteile (14, 16, 18) aufweist, die jeweils einen Verbindungsabschnitt (20, 22) aufweisen, über den die Verbindungsteile (14, 16, 18) miteinander verbindbar sind, wobei die Verbindungsabschnitte (20, 22) jeweils einen inneren Querschnitt (24, 26) nach außen hin begrenzen, wobei
innerhalb des jeweiligen Querschnitts (24, 26) ein elektrischer Steckverbinder (28, 30) und eine Anschlussöffnung (36, 38) zu einem im jeweiligen Verbindungsteil (14, 16, 18) ausgebildeten Strömungskanal (40, 42) derart vorgesehen sind, dass beim Zusammenstecken der Verbindungsabschnitte (20, 22) mechanische Spannelemente (32, 34) einander hintergreifen und die Steckverbinder (28, 30) und/oder die Anschlussöffnungen (36, 38) jeweils miteinander verbunden werden, **dadurch gekennzeichnet, dass** die mechanischen Spannelemente (32, 34) innerhalb des jeweiligen Querschnitts (24, 26) vorgesehen sind.

2. Verbindungsanordnung (10) nach Anspruch 1, **dadurch gekennzeichnet, dass** die Verbindungsteile (14, 16, 18) lösbar miteinander verbindbar sind.

3. Verbindungsanordnung (10) nach Anspruch 1 oder 2, **dadurch gekennzeichnet, dass** das Spannelement (32, 34) innerhalb des Querschnitts (24, 26) im Wesentlichen mittig angeordnet ist.

4. Verbindungsanordnung (10) nach einem der voranstehenden Ansprüche, **dadurch gekennzeichnet, dass** der Steckverbinder (28, 30) an einer Seite des Spannelements (32, 34) angeordnet ist und dass an der von dem Steckverbinder (28, 30) abgewandten Seite des Spannelements (32, 34) die Anschlussöffnung (36, 38) des Strömungskanals (40, 42) angeordnet ist.

5. Verbindungsanordnung (10) nach einem der voranstehenden Ansprüche, **dadurch gekennzeichnet, dass** die Verbindungsabschnitte (20, 22) jeweils eine einteilige oder mehrteilige Ummantelung (44, 46) aufweisen, die das jeweilige Verbindungsteil (14, 16, 18) abschnittsweise einfasst.

6. Verbindungsanordnung (10) nach einem der voranstehenden Ansprüche, **dadurch gekennzeichnet, dass** einer der Verbindungsabschnitte (20, 22), insbesondere an dessen Ummantelung (44, 46), einen parallel zur Längsachse (12) abragenden Bund (50) aufweist, mit dem dieser Verbindungsabschnitt (22) beim Zusammenstecken den gegenüberliegenden Verbindungsabschnitt (20) umgreift.

7. Verbindungsanordnung (10) nach Anspruch 6, **dadurch gekennzeichnet, dass** der Bund (50) eine sich nach außen erweiternde, insbesondere konisch ausgebildete, Innenfläche (52) aufweist und dass der gegenüberliegende Verbindungsabschnitt (20), insbesondere an dessen Ummantelung (44), eine sich nach außen verjüngende, insbesondere konisch verjüngende, Außenfläche (54) aufweist.

8. Verbindungsanordnung (10) nach Anspruch 6 oder 7, **dadurch gekennzeichnet, dass** die Verbindungsabschnitte (20, 22), insbesondere an deren Ummantelung (44, 46), einen die Stirnseite des jeweiligen Verbindungsteils (14, 16) überdeckenden Auflageabschnitt (56, 58) aufweisen, wobei die Auflageabschnitte (56, 58) miteinander in Kontakt gelangen, wenn die Verbindungsabschnitte (20, 22) zusammengesteckt sind.

9. Verbindungsanordnung (10) nach einem der Ansprüche 6 bis 8, **dadurch gekennzeichnet, dass** der Verbindungsabschnitt (20), der beim Zusammenstecken durch den gegenüberliegenden Verbindungsabschnitt (22) umgriffen wird, an seinem vom freien Ende des jeweiligen Verbindungsteils (14) abgewandten Ende einen radial abragenden Absatz (60) aufweist.

10. Verbindungsanordnung (10) nach einem der voranstehenden Ansprüche, **dadurch gekennzeichnet, dass** die Steckverbinder (28, 30) als mehrpolige Steckverbinder mit jeweils mindestens zwei Polen ausgebildet sind.

11. Verbindungsanordnung (10) nach einem der voranstehenden Ansprüche, **dadurch gekennzeichnet, dass** der Steckverbinder (28, 30), das Spannelement (32, 34) und/oder die Anschlussöffnung (36, 38) relativ zur Stirnseite des Verbindungsabschnitts (20, 22) bündig oder nach innen versetzt angeordnet sind.

12. Verbindungsanordnung (10) nach einem der voranstehenden Ansprüche, **dadurch gekennzeichnet, dass** zumindest einer der Steckverbinder (28, 30) jeweils mittels eines elastischen Elements (64) am Verbindungsabschnitt (20, 22) oder am Verbindungsteil (14, 16, 18) gelagert ist.

13. Verbindungsanordnung (10) nach Anspruch 12, **dadurch gekennzeichnet, dass** der Steckverbinder (28, 30) durch das elastische Element (64) in eine, vorzugsweise mittige, Ausgangsstellung rückstellbar ist.

14. Verbindungsanordnung (10) nach einem der voranstehenden Ansprüche, **dadurch gekennzeichnet, dass** im Steckverbinder (28, 30), insbesondere angrenzend an die Steckkontakte, jeweils eine oder mehrere Staubabführöffnungen ausgebildet sind.

15. Verbindungsanordnung (10) nach einem der voranstehenden Ansprüche, **dadurch gekennzeichnet, dass** die Steckverbinder (28, 30) der Verbindungsabschnitte (20, 22) eines ersten der Verbindungsteile (14, 16, 18) und des zweiten Verbindungsteils (16, 18) teil- oder vollkomplementär zueinander ausgebildet sind.

16. Verbindungsanordnung (10) nach einem der voranstehenden Ansprüche, **dadurch gekennzeichnet, dass** die Verbindungsteile (14, 16, 18) jeweils eine sich parallel zu oder entlang der Längsachse (12) erstreckende Wandung (66, 68) aufweisen, die den Querschnitt der Verbindungsteile (14, 16) jeweils in separate Abschnitte (70, 72, 74, 76) unterteilt, wobei in einem ersten Abschnitt (70, 74) jeweils der Strömungskanal (40, 42) angeordnet ist und der Steckverbinder (28, 30) und das Spannelement (32, 34) jeweils in einem weiteren Abschnitt (72, 76) angeordnet sind.

17. Verbindungsanordnung (10) nach einem der voranstehenden Ansprüche, **dadurch gekennzeichnet, dass** an wenigstens einem der Verbindungsabschnitte (20, 22) eine Betätigungseinrichtung (80) angeordnet ist, die mittels einer Spanneinrichtung (82) mit dem an diesem Verbindungsabschnitt (22) angeordneten Spannelement (34) gekoppelt ist, so dass die Verbindungsteile (14, 16, 18) bei in Eingriff befindlichen Spannelementen (32, 34) durch Betätigung der Betätigungseinrichtung (80) gegeneinander verspannbar sind.

18. Verbindungsanordnung (10) nach einem der voranstehenden Ansprüche, **dadurch gekennzeichnet, dass** ein weiteres Verbindungsteil (16) vorgesehen ist, welches an beiden Enden jeweils einen Verbindungsabschnitt (20, 22) aufweist, so dass das weitere Verbindungsteil (16) als Verlängerungsstück zwischen die beiden Verbindungsteile (14, 18) eingefügt und mit diesen verbunden werden kann.

19. Werkzeugmaschine (200), insbesondere Oberflächenbearbeitungsmaschine (200), mit einem Bearbeitungskopf (202), einem weiteren Maschinenmodul (204) und einer Verbindungsanordnung (10) zur Verbindung von Bearbeitungskopf (202) und weiterem Maschinenmodul (204) nach einem der voranstehenden Ansprüche.

20. Verlängerungsstück (16) für eine Verbindungsanordnung (10) zur Verbindung eines Bearbeitungskopfs (202) und eines weiteren Maschinenmoduls (204) einer Werkzeugmaschine (200), wobei das Verlängerungsstück (16) an beiden Enden jeweils einen Verbindungsabschnitt (20, 22) aufweist, über den das Verlängerungsstück (16) jeweils mit einem Verbindungsteil (14, 18) der Verbindungsanordnung (10) verbindbar ist, wobei die Verbindungsabschnitte (20, 22) des Verlängerungsstücks (16) jeweils einen inneren Querschnitt (24, 26) nach außen hin begrenzen, wobei innerhalb des jeweiligen Querschnitts (24, 26) ein elektrischer Steckverbinder (28, 30), und eine Anschlussöffnung (36, 38) zu einem im Verlängerungsstück (16) ausgebildeten Strömungskanal (42) vorgesehen sind, **dadurch gekennzeichnet, dass** ein mechanisches Spannelement (32, 34) innerhalb des jeweiligen Querschnitts (24, 26) vorgesehen ist.

21. Verlängerungsstück (16) nach Anspruch 20, **dadurch gekennzeichnet, dass** der elektrische Steckverbinder (28, 30), das mechanische Spannelement (32, 34) und die Anschlussöffnung (36, 38) derart vorgesehen sind, dass beim Zusammenstecken eines Verbindungsabschnitts (20, 22) des Verlängerungsstücks (16) mit einem Verbindungsteil (14, 18) der Verbindungsanordnung (10) die Spannelemente (32, 34) einander hintergreifen und die Steckverbinder (28, 30) und/oder die Anschlussöffnungen (36, 38) jeweils miteinander verbunden werden.

22. Verlängerungsstück (16) nach einem der Ansprüche 20 bis 21, **dadurch gekennzeichnet, dass** die Verbindungsabschnitte (20, 22) des Verlängerungsstücks (16) komplementär zueinander ausgebildet sind.

23. Verlängerungsstück (16) nach einem der Ansprüche 20 bis 22, **dadurch gekennzeichnet, dass** das Spannelement (32, 34) innerhalb des Querschnitts (24, 26) im Wesentlichen mittig angeordnet ist.

24. Verlängerungsstück (16) nach einem der Ansprüche 20 bis 23, **dadurch gekennzeichnet, dass** der Steckverbinder (28, 30) an einer Seite des Spannelements (32, 34) angeordnet ist und dass an der von dem Steckverbinder (28, 30) abgewandten Seite des Spannelements (32, 34) die Anschlussöffnung (36, 38) des Strömungskanals (42) angeordnet ist.

25. Verlängerungsstück (16) nach einem der Ansprüche 20 bis 24, **dadurch gekennzeichnet, dass** die Steckverbinder (28, 30) als mehrpolige Steckverbinder mit jeweils mindestens zwei Polen ausgebildet sind.

26. Verlängerungsstück (16) nach einem der Ansprüche 20 bis 25, **dadurch gekennzeichnet, dass** der Steckverbinder (28, 30), das Spannelement (32, 34) und/oder die Anschlussöffnung (36, 38) relativ zur Stirnseite des Verbindungsabschnitts (20, 22) bündig oder nach innen versetzt angeordnet sind.

27. Verlängerungsstück (16) nach einem der Ansprüche 20 bis 26, **dadurch gekennzeichnet, dass** an einem der Verbindungsabschnitte (20, 22) eine Betätigungseinrichtung (80) angeordnet ist, die mittels einer Spanneinrichtung (82) mit dem an diesem Verbindungsabschnitt (22) angeordneten Spannelement (34) gekoppelt ist.

28. Verlängerungsstück (16) nach einem der Ansprüche 20 bis 27, **dadurch gekennzeichnet, dass** das Verlängerungsstück (16) jeweils eine sich parallel zu oder entlang der Längsachse (12) erstreckende Wandung (68) aufweist, die den Querschnitt des Verlängerungsstücks (16) in separate Abschnitte (74, 76) unterteilt, wobei in einem ersten Abschnitt (74) der Strömungskanal (42) angeordnet ist und der Steckverbinder (30) und das Spannelement (34) jeweils in einem weiteren Abschnitt (76) angeordnet sind.

## Claims

1. Connection assembly (10) for connecting a tool head (202) and a further machine module (204) of a machine tool (200), in particular a surface finishing machine (200), wherein the connection assembly (10) comprises at least two connection parts (14, 16, 18) following one another along a longitudinal axis (12) and each having a connection section (20, 22) via which the connection parts (14, 16, 18) are connectable to one another, wherein the connection sections (20, 22) each delimit an inner cross section (24, 26) to the outside, wherein inside the respective cross section (24, 26) an electrical plug connector (28, 30) and a connection opening (36, 38) to a flow channel (40, 42) formed in the respective connection part (14, 16, 18) are provided in such a way that when the connection sections (20, 22) are plugged together, mechanical clamping elements (32, 34) engage behind one another and the plug connectors (28, 30) and/or the connection openings (36, 38) are respectively connected to one another, **characterized in that** the mechanical clamping elements (32, 34) are provided inside the respective cross section (24, 26).

2. Connection assembly (10) according to claim 1, **characterized in that** the connection parts (14, 16, 18) are detachably connectable to each other.

3. Connection assembly (10) according to claim 1 or 2, **characterized in that** the clamping element (32, 34) is arranged substantially centrally within the cross section (24, 26).

4. Connection assembly (10) according to one of the preceding claims, **characterized in that** the plug connector (28, 30) is arranged on one side of the clamping element (32, 34) and **in that** the connection opening (36, 38) of the flow channel (40, 42) is arranged on the side of the clamping element (32, 34) facing away from the plug connector (28, 30).

5. Connection assembly (10) according to one of the preceding claims, **characterized in that** the connection sections (20, 22) each have a single-part or multi-part sheathing (44, 46) which encloses the respective connection parts (14, 16, 18) sectionally.

6. Connection assembly (10) according to one of the preceding claims, **characterized in that** one of the connection sections (20, 22), in particular on its sheathing (44, 46), has a collar (50) projecting parallel to the longitudinal axis (12), by which said connection section (22) encompasses the opposite connection section (20) when plugged together.

7. Connection assembly (10) according to claim 6, **characterized in that** the collar (50) has an outwardly widening, in particular conically shaped, inner surface (52), and **in that** the opposite connection section (20), in particular on its sheathing (44), has an outwardly tapering, in particular conically tapered, outer surface (54).

8. Connection assembly (10) according to claim 6 or 7, **characterized in that** the connection sections (20, 22), in particular on their sheathing (44, 46), have a resting section (56, 58) covering the end face of the respective connection part (14, 16), the resting sections (56, 58) coming into contact with one another when the connection sections (20, 22) are plugged together.

9. Connection assembly (10) according to one of claims 6 to 8, **characterized in that** the connection section (20), which is encompassed by the opposite connection section (22) when plugged together, has a radially projecting protrusion (60) at its end facing away from the free end of the respective connection part (14).

10. Connection assembly (10) according to one of the preceding claims, **characterized in that** the plug connectors (28, 30) are embodied as multipole connectors with at least two poles each.

11. Connection assembly (10) according to one of the preceding claims, **characterized in that** the plug connector (28, 30), the clamping element (32, 34) and/or the connection opening (36, 38) are arranged flush with or inwardly offset relative to the end face of the connection section (20, 22).

12. Connection assembly (10) according to one of the preceding claims, **characterized in that** at least one of the plug connectors (28, 30) is mounted via an elastic element (64) on the connection section (20, 22) or on the connection part (14, 16, 18) respectively.

13. Connection assembly (10) according to claim 12, **characterized in that** the plug connector (28, 30) is returnable by the elastic element (64) into a, preferably central, initial position.

14. Connection assembly (10) according to one of the preceding claims, **characterized in that** one or more dust removal openings are formed in the plug connector (28, 30), in particular adjacent to plug contacts.

15. Connection assembly (10) according to one of the preceding claims, **characterized in that** the plug connectors (28, 30) of the connection sections (20, 22) of a first of the connection parts (14, 16, 18) and of the second connection part (16, 18) are formed partially or fully complementary to each other.

16. Connection assembly (10) according to one of the preceding claims, **characterized in that** the connection parts (14, 16, 18) each have a wall (66, 68) extending parallel to or along the longitudinal axis (12), wherein the wall divides the cross-section of the connection parts (14, 16) into separate sections (70, 72, 74, 76) respectively, wherein the flow channel (40, 42) is arranged in a first section (70, 74) respectively and the plug connector (28, 30) and the clamping element (32, 34) are arranged in a further section (72, 76) respectively.

17. Connection assembly (10) according to one of the preceding claims, **characterized in that** an actuating device (80) is arranged on at least one of the connection sections (20, 22), wherein the actuating device (80) is coupled via a clamping device (82) to the clamping element (34) arranged on this connection section (22), so that the connection parts (14, 16, 18) are clampable against one another by actuation of the actuating device (80) when the clamping elements (32, 34) are engaged.

18. Connection assembly (10) according to one of the preceding claims, **characterized in that** a further connection part (16) is provided, which has a connection section (20, 22) at each end, so that the further connection part (16) can be inserted as an extension piece between the two connection parts (14, 18) and connected thereto.

19. Machine tool (200), in particular surface finishing machine (200), having a tool head (202), a further machine module (204) and a connection assembly (10) for connecting the tool head (202) and the further machine module (204) according to one of the preceding claims.

20. Extension piece (16) for a connection assembly (10) for connecting a tool head (202) and a further machine module (204) of a machine tool (200), wherein the extension piece (16) has at both ends a respective connection section (20, 22) via which the extension piece (16) is connectable to a connection part (14, 18) of the connection assembly (10) respectively, wherein the connection sections (20, 22) of the extension piece (16) each delimit an inner cross-section (24, 26) towards the outside, wherein within the respective cross-section (24, 26) an electrical plug connector (28, 30) and a connection opening (36, 38) to a flow channel (42) formed in the extension piece (16) are provided, **characterized in that** a mechanical clamping element (32, 34) is provided within the respective cross-section (24, 26) .

21. Extension piece (16) according to claim 20, **characterized in that** the electrical plug connector (28, 30), the mechanical clamping element (32, 34) and the connection opening (36, 38) are provided in such a way that, when a connection section (20, 22) of the extension piece (16) is plugged together with a connection part (14, 18) of the connection assembly (10), the clamping elements (32, 34) engage behind one another and the plug connectors (28, 30) and/or the connection openings (36, 38) are respectively connected to one another.

22. Extension piece (16) according to one of claims 20 to 21, **characterized in that** the connection sections (20, 22) of the extension piece (16) are formed complementarily to one another.

23. Extension piece (16) according to one of claims 20 to 22, **characterized in that** the clamping element (32, 34) is arranged substantially centrally within the cross-section (24, 26).

24. Extension piece (16) according to one of claims 20 to 23, **characterized in that** the plug connector (28, 30) is arranged on one side of the clamping element (32, 34) and **in that** the connection opening (36, 38) of the flow channel (42) is arranged on the side of the clamping element (32, 34) facing away from the plug connector (28, 30).

25. Extension piece (16) according to one of claims 20 to 24, **characterized in that** the plug connectors (28, 30) are designed as multipole connectors with at least two poles each.

26. Extension piece (16) according to one of claims 20 to 25, **characterized in that** the plug connector (28, 30), the clamping element (32, 34) and/or the connection opening (36, 38) are arranged flush with or offset inwardly relative to the end face of the connection section (20, 22).

27. Extension piece (16) according to one of claims 20 to 26, **characterized in that** an actuating device (80) is arranged on one of the connecting sections (20, 22) and is coupled via a clamping device (82) to the clamping element (34) arranged on this connecting section (22).

28. Extension piece (16) according to one of claims 20 to 27, **characterized in that** the extension piece (16) has a wall (68) extending parallel to or along the longitudinal axis (12) respectively, wherein the wall (68) divides the cross-section of the extension piece (16) into separate sections (74, 76), wherein the flow channel (42) is arranged in a first section (74) and the plug connector (30) and the clamping element (34) are respectively arranged in a further section (76) .

## Revendications

1. Agencement de raccordement (10) pour raccorder une tête de traitement (202) et un module de machine supplémentaire (204) d'une machine-outil (200), en particulier une machine de traitement de surface (200), dans lequel l'agencement de raccordement (10) présente au moins deux parties de raccordement (14, 16, 18) se suivant le long d'un axe longitudinal (12) et présentant chacune une section de raccordement (20, 22) par l'intermédiaire desquelles les parties de raccordement (14, 16, 18) peuvent être raccordées les unes aux autres, dans lequel les sections de raccordement (20, 22) délimitent chacune une section transversale interne (24, 26) vers l'extérieur, dans lequel un connecteur mâle électrique (28, 30) et une ouverture de connexion (36, 38) vers un canal de circulation (40, 42) formé dans la partie de raccordement respective (14, 16, 18) sont prévus à l'intérieur de la section transversale respective (24, 26) de telle sorte que des éléments de serrage mécanique (32, 34) viennent en prise l'un avec l'autre lors de l'enfichage des sections de raccordement (20, 22) et que les connecteurs mâles (28, 30) et/ou les ouvertures de connexion (36, 38) sont raccordés les uns aux autres respectivement, **caractérisé en ce que** les éléments de serrage mécanique (32, 34) sont prévus à l'intérieur de la section transversale respective (24, 26).

2. Agencement de raccordement (10) selon la revendication 1, **caractérisé en ce que** les parties de raccordement (14, 16, 18) peuvent être raccordées les unes aux autres de manière amovible.

3. Agencement de raccordement (10) selon la revendication 1 ou 2, **caractérisé en ce que** l'élément de serrage (32, 34) est agencé sensiblement au centre à l'intérieur de la section transversale (24, 26).

4. Agencement de raccordement (10) selon l'une quelconque des revendications précédentes, **caractérisé en ce que** le connecteur mâle (28, 30) est agencé sur un côté de l'élément de serrage (32, 34) et **en ce que** l'ouverture de connexion (36, 38) du canal de circulation (40, 42) est agencée sur le côté de l'élément de serrage (32, 34) opposé au connecteur mâle (28, 30).

5. Agencement de raccordement (10) selon l'une quelconque des revendications précédentes, **caractérisé en ce que** les sections de raccordement (20, 22) présentent chacune une gaine (44, 46) en une seule pièce ou en plusieurs pièces, qui entoure par sections la partie de raccordement respective (14, 16, 18).

6. Agencement de raccordement (10) selon l'une quelconque des revendications précédentes, **caractérisé en ce que** l'une des sections de raccordement (20, 22), en particulier au niveau de sa gaine (44, 46), présente un collier (50) faisant saillie parallèlement à l'axe longitudinal (12), avec lequel cette section de raccordement (22) entoure la section de raccordement opposée (20) lors de l'enfichage.

7. Agencement de raccordement (10) selon la revendication 6, **caractérisé en ce que** le collier (50) présente une surface intérieure (52) réalisée s'élargissant vers l'extérieur, en particulier conique, et **en ce que** la section de raccordement opposée (20) présente une surface extérieure (54) rétrécissant vers l'extérieur, en particulier rétrécissant de manière conique, en particulier au niveau de sa gaine (44).

8. Agencement de raccordement (10) selon la revendication 6 ou 7, **caractérisé en ce que** les sections de raccordement (20, 22) présentent, en particulier au niveau de leur gaine (44, 46), une section d'appui (56, 58) recouvrant le côté frontal de la partie de raccordement respective (14, 16), dans lequel les sections d'appui (56, 58) viennent en contact l'une avec l'autre lorsque les sections de raccordement (20, 22) sont enfichées ensemble.

9. Agencement de raccordement (10) selon l'une quelconque des revendications 6 à 8, **caractérisé en ce que** la section de raccordement (20) qui est entourée par la section de raccordement opposée (22) lors de l'enfichage, présente un épaulement faisant saillie radialement (60) à son extrémité opposée à l'extrémité libre de la partie de raccordement respective (14).

10. Agencement de raccordement (10) selon l'une quelconque des revendications précédentes, **caractérisé en ce que** les connecteurs mâles (28, 30) sont réalisés sous forme de connecteurs mâles multipolaires avec chacun au moins deux pôles.

11. Agencement de raccordement (10) selon l'une quelconque des revendications précédentes, **caractérisé en ce que** le connecteur mâle (28, 30), l'élément de serrage (32, 34) et/ou l'ouverture de connexion (36, 38) sont agencés de manière à être affleurants ou décalés vers l'intérieur par rapport au côté frontal de la section de raccordement (20, 22).

12. Agencement de raccordement (10) selon l'une quelconque des revendications précédentes, **caractérisé en ce qu'**au moins l'un des connecteurs mâles (28, 30) est monté respectivement au moyen d'un élément élastique (64) sur la section de raccordement (20, 22) ou sur la partie de raccordement (14, 16, 18).

13. Agencement de raccordement (10) selon la revendication 12, **caractérisé en ce que** le connecteur mâle (28, 30) peut être rappelé dans une position initiale, de préférence centrale, par l'élément élastique (64).

14. Agencement de raccordement (10) selon l'une quelconque des revendications précédentes, **caractérisé en ce qu'**une ou plusieurs ouvertures d'évacuation de poussière sont réalisées respectivement dans le connecteur mâle (28, 30), en particulier à proximité immédiate des contacts enfichables.

15. Agencement de raccordement (10) selon l'une des revendications précédentes, **caractérisé en ce que** les connecteurs enfichables (28, 30) des sections de raccordement (20, 22) d'une première des parties de raccordement (14, 16, 18) et de la seconde partie de raccordement (16, 18) sont réalisés de manière à être partiellement ou complètement complémentaires l'un de l'autre.

16. Agencement de raccordement (10) selon l'une quelconque des revendications précédentes, **caractérisé en ce que** les parties de raccordement (14, 16, 18) présentent chacune une paroi (66, 68) s'étendant de manière parallèle à l'axe longitudinal (12) ou le long de celui-ci, qui divise la section transversale des parties de raccordement (14, 16) en sections séparées (70, 72, 74, 76), dans lequel le canal de circulation (40, 42) est agencé dans une première section (70, 74) et le connecteur mâle (28, 30) et l'élément de serrage (32, 34) sont agencés dans une section supplémentaire (72, 76).

17. Agencement de raccordement (10) selon l'une quelconque des revendications précédentes, **caractérisé en ce qu'**un dispositif d'actionnement (80) est agencé au niveau d'au moins l'une des sections de raccordement (20, 22), qui est couplé au moyen d'un dispositif de serrage (82) à l'élément de serrage (34) agencé au niveau de cette section de raccordement (22), de sorte que les parties de raccordement (14, 16, 18) peuvent être serrées les unes contre les autres par actionnement du dispositif d'actionnement (80) lorsque les éléments de serrage (32, 34) sont en prise.

18. Agencement de raccordement (10) selon l'une quelconque des revendications précédentes, **caractérisé en ce qu'**une partie de raccordement supplémentaire (16) est prévue, qui présente respectivement une section de raccordement (20, 22) aux deux extrémités, de sorte que la partie de raccordement supplémentaire (16) peut être insérée comme pièce d'extension entre les deux parties de raccordement (14, 18) et peut être raccordée à celles-ci.

19. Machine-outil (200), en particulier machine de traitement de surface (200), avec une tête de traitement (202), un autre module de machine (204) et un agencement de raccordement (10) pour le raccordement de la tête de traitement (202) et de l'autre module de machine (204) selon l'une quelconque des revendications précédentes.

20. Pièce d'extension (16) pour un agencement de raccordement (10) pour raccorder une tête de traitement (202) et un module de machine supplémentaire (204) d'une machine-outil (200), dans laquelle la pièce d'extension (16) présente aux deux extrémités respectivement une section de raccordement (20, 22), par l'intermédiaire de laquelle la pièce d'extension (16) peut être raccordée respectivement à une partie de raccordement (14, 18) de l'agencement de raccordement (10), dans laquelle les sections de raccordement (20, 22) de la pièce d'extension (16) délimitent respectivement une section transversale interne (24, 26) vers l'extérieur, dans laquelle un connecteur mâle électrique (28, 30) à l'intérieur de la section transversale respective (24, 26) et une ouverture de connexion (36, 38) vers un canal de circulation (42) formé dans la pièce d'extension (16) sont prévus, **caractérisée en ce qu'**un élément de serrage mécanique (32, 34) est prévu à l'intérieur de la section transversale respective (24, 26).

21. Pièce d'extension (16) selon la revendication 20, **caractérisée en ce que** le connecteur mâle (28, 30), l'élément de serrage mécanique (32, 34) et l'ouverture de connexion (36, 38) sont prévus de telle sorte que lors de l'enfichage d'une section de raccordement (20, 22) de la pièce d'extension (16) avec une partie de raccordement (14, 18) de l'agencement de raccordement (10), les éléments de serrage (32, 34) viennent en prise l'un avec l'autre et les connecteurs mâles (28, 30) et/ou les ouvertures de raccordement (36, 38) sont raccordés les uns aux autres.

22. Pièce d'extension (16) selon l'une quelconque des revendications 20 à 21, **caractérisée en ce que** les sections de raccordement (20, 22) de la pièce d'extension (16) sont réalisées de manière à être complémentaires l'une de l'autre.

23. Pièce d'extension (16) selon l'une quelconque des revendications 20 à 22, **caractérisée en ce que** l'élément de serrage (32, 34) est agencé sensiblement au centre à l'intérieur de la section transversale (24, 26).

24. Pièce d'extension (16) selon l'une quelconque des revendications 20 à 23, **caractérisée en ce que** le connecteur mâle (28, 30) est agencé sur un côté de l'élément de serrage (32, 34) et **en ce que** l'ouverture de connexion (36, 38) du canal de circulation (42) est agencée sur le côté de l'élément de serrage (32, 34) opposé au connecteur mâle (28, 30).

25. Pièce d'extension (16) selon l'une quelconque des revendications 20 à 24, **caractérisée en ce que** les connecteurs mâles (28, 30) sont réalisés sous forme de connecteurs mâles multipolaires avec chacun au moins deux pôles.

26. Pièce d'extension (16) selon l'une quelconque des revendications 20 à 25, **caractérisée en ce que** le connecteur mâle (28, 30), l'élément de serrage (32, 34) et/ou l'ouverture de connexion (36, 38) sont agencés de manière à être affleurants ou décalés vers l'intérieur par rapport au côté frontal de la section de raccordement (20, 22).

27. Pièce d'extension (16) selon l'une quelconque des revendications 20 à 26, **caractérisée en ce qu'**un dispositif d'actionnement (80) est agencé au niveau d'au moins l'une des sections de raccordement (20, 22), qui est couplé à l'élément de serrage (34) agencé au niveau de cette section de raccordement (22) au moyen d'un dispositif de serrage (82).

28. Pièce d'extension (16) selon l'une quelconque des revendications 20 à 27, **caractérisée en ce que** la pièce d'extension (16) présente respectivement une paroi (68) s'étendant de manière parallèle à l'axe longitudinal (12) ou le long de celui-ci, qui divise la section transversale de la pièce d'extension (16) en sections séparées (74, 76), dans laquelle le canal de circulation (42) est agencé dans une première section (74) et le connecteur mâle (30) et l'élément de serrage (34) sont agencés respectivement dans une section supplémentaire (76).
